(19) **Europäisches Patentamt / European Patent Office / Office européen des brevets**

(11) **EP 4 090 063 A1**

(12) ## EUROPEAN PATENT APPLICATION
published in accordance with Art. 153(4) EPC

(43) Date of publication:
**16.11.2022 Bulletin 2022/46**

(21) Application number: **20918248.4**

(22) Date of filing: **14.02.2020**

(51) International Patent Classification (IPC):
**H04W 24/02** (2009.01)

(52) Cooperative Patent Classification (CPC):
**H04W 24/02**

(86) International application number:
**PCT/CN2020/075341**

(87) International publication number:
**WO 2021/159493 (19.08.2021 Gazette 2021/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129, (CN)**

(72) Inventors:
- **GUAN, Peng**
  **Shenzhen, Guangdong 518129 (CN)**
- **CHEN, Lei**
  **Shenzhen, Guangdong 518129 (CN)**

(74) Representative: **Maiwald Patent- und Rechtsanwaltsgesellschaft mbH**
**Elisenhof**
**Elisenstraße 3**
**80335 München (DE)**

(54) **RESOURCE CONFIGURATION METHOD AND APPARATUS**

(57)    This application provides a resource configuration method. The method includes: receiving configuration information sent by a network device, where the configuration information includes at least a first SRS resource set and a second SRS resource set, and usage of each SRS resource set is beam management + antenna switch; and sending each SRS resource in the first SRS resource set by using a first antenna group, and sending each SRS resource in the second SRS resource set by using a second antenna group. In this way, the terminal implements both of functions: beam selection and antenna switch, so that a downlink channel measured by a base station is no longer limited to a range of an analog beam direction. This helps improve a downlink transmission rate.

UE — gNB

100: Report a capability of the terminal

101: Configuration information

102: Send an SRS

103: SRS measurement

104: Notify a downlink beam

FIG. 5

**Description**

**TECHNICAL FIELD**

This application relates to the communication field, and more specifically, to a resource configuration method and an apparatus.

**BACKGROUND**

A sounding reference signal (Sounding reference signal, SRS) is an uplink sounding signal of a terminal, and may be used by a base station to measure quality of an uplink radio channel. The SRS is sent by the terminal, and is received and detected by the base station. An SRS sending manner, including a time-frequency resource, a transmit beam, a transmit power, and the like, is configured by the base station for the terminal. In 3GPP standard New Radio (NR) Release 15 (R15 for short), a base station may configure one or more SRS resource sets (SRS resource set) for a terminal, and each SRS resource set includes one or more SRS resources (SRS resource).

The base station may obtain information about an uplink channel of the terminal by measuring the SRS sent by the terminal, and determine, with reference to reciprocity (reciprocity) between uplink and downlink channels, information about a downlink channel corresponding to the uplink channel of the terminal. Transmit and receive capabilities of a part of terminals are inconsistent. For example, considering factors such as power consumption, a quantity of transmit antennas (or a quantity of transmit antenna ports) that can be simultaneously used by the terminal may be less than a quantity of receive antennas (or a quantity of receive antenna ports) that can be simultaneously used by the terminal. Therefore, the terminal may send the SRS for a plurality of times, and a part of antennas are used for each time of sending, so that the base station can determine information about uplink channels corresponding to the part of antennas of the terminal during each measurement. After several times of measurement, the base station can finally determine information about downlink channels of all antennas of the terminal.

When the terminal includes a plurality of antenna groups, SRS sending is performed by using a same analog beam, that is, towards a specific azimuth. Consequently, a sounding range is limited, and an appropriate downlink channel cannot be determined, resulting in degradation of downlink transmission performance.

**SUMMARY**

This application provides a resource configuration method and an apparatus, to improve downlink data or signal transmission efficiency.

According to one aspect, a resource configuration method is disclosed. The method includes: receiving configuration information sent by a network device, where the configuration information includes at least a first SRS resource set and a second SRS resource set, and usage of each SRS resource set is beam management + antenna switch; and sending each SRS resource in the first SRS resource set by using a first antenna group, and sending each SRS resource in the second SRS resource set by using a second antenna group.

The foregoing method may be performed by a terminal, or may be performed by a chip or a functional unit in the terminal.

The foregoing method is described by using an example in which the configuration information includes two SRS resource sets. However, a quantity of SRS resource sets is not limited to 2, and there may be a plurality of SRS resource sets. Usually, the quantity of SRS resource sets may be determined based on a capability of the terminal. The capability of the terminal includes 1T2R, 1T4R, 2T4T, 4T8R, and the like, where T represents transmission, and R represents reception.

One antenna group may correspond to one antenna panel. To be specific, antennas in one antenna group are located on one antenna panel. Different antenna groups correspond to different antenna panels. In another example, a plurality of antennas on one antenna panel may be grouped into a plurality of antenna groups. For example, four antennas on one antenna panel are grouped into two antenna groups, and each group includes two antennas.

Usually, in a standard, "antenna" is not used, but "antenna port (antenna port)" is used. This is a logical concept. For ease of description, an antenna port is usually referred to as an "antenna" for short. In this application, the antenna and the antenna port may be interchanged.

In the foregoing solution, each SRS resource set may include one or more SRS resources, and each antenna group includes one or more antennas (or antenna ports).

With reference to the foregoing solution, SRS resources in a same SRS resource set are sent by using different beams.

In another solution, SRS resources in a same antenna group may alternatively be sent by using a same beam. In this case, the SRS resources can be used for beam management of the network device, to determine an appropriate downlink beam for the network device.

With reference to the foregoing solution, a combination of the SRS resources in the two SRS resource sets has a preset binding relationship. For example, each SRS resource in the first SRS resource set is associated with each SRS resource in the second SRS resource set. The binding relationship may be preset, or may be notified by the network device to the terminal.

With reference to the foregoing solution, SRS resources whose identifiers are in a same order in the first SRS resource set and the second SRS resource set are sent by using a same beam.

In another example, SRS resources whose identifiers are in a same order in the first SRS resource set and the second SRS resource set may alternatively be sent by using different beams.

With reference to the foregoing solution, the first SRS resource set and the second SRS resource set have at least one of the following same parameters: a path loss estimation reference signal, time domain behavior, and a transmit power-related parameter.

With reference to the foregoing solution, a transmission time interval between the first SRS resource set and the second SRS resource set is greater than or equal to antenna group activation and/or switching time of the terminal.

With reference to the foregoing solution, a transmission time interval between the first SRS resource set and the second SRS resource set is less than or equal to a specified time threshold, and the time threshold is related to channel coherence time.

With reference to the foregoing solution, further, the network device measures each SRS resource, in the first SRS resource set, sent by the terminal by using the first antenna group, determines an SRS resource that meets a quality requirement, for example, an SRS resource having highest signal quality, and uses a beam used to send the SRS resource as an appropriate transmit beam for the terminal, to determine that a receive beam corresponding to the transmit beam is an appropriate downlink beam for the first antenna group of the terminal.

Similarly, the network device measures each SRS resource, in the second SRS resource set, sent by the terminal by using the second antenna group, and may determine, based on a measurement result, an appropriate downlink beam for the second antenna group of the terminal.

Further, the network device may notify the terminal of the appropriate downlink beam for the first antenna group and the appropriate downlink beam for the second antenna group.

The appropriate downlink beam may be used for downlink transmission of the terminal, for example, receiving of a downlink signal or downlink data such as a physical downlink control channel (physical downlink control channel, PDCCH), a physical downlink shared channel (physical downlink shared channel, PDSCH), or a channel state information reference signal (channel state information reference signal, CSI-RS).

Further, the appropriate transmit beam for the terminal may be used for uplink transmission of the terminal, for example, sending of uplink data or an uplink signal such as a physical uplink control channel (physical uplink control channel, PUCCH), a physical uplink shared channel (physical uplink shared channel, PUSCH), or an SRS.

With reference to the foregoing solution, the method further includes: receiving indication information delivered by the network device. The indication information includes information about a beam used by each antenna group for downlink transmission, for example, includes information about a beam used by the first antenna group for downlink transmission and information about a beam used by the second antenna group for downlink transmission. The indication information may be delivered by using radio resource control (radio resource control, RRC), a MAC control element (Media Access Control control element, MAC CE), downlink control information (downlink control information, DCI), or the like. The information about the beam may be represented by using a transmission configuration indication state (Transmission Configuration Indication state, TCI state).

With reference to the foregoing solution, the beam used by the terminal for uplink transmission or downlink transmission is indicated by using an SRS identifier.

For example, the method further includes: receiving the TCI state delivered by the network device. The TCI state includes an identifier of an SRS resource determined in each SRS resource set. Alternatively, the TCI state includes an identifier of an SRS resource determined in one of the SRS resource sets and an offset value of the determined SRS resource. In this case, an identifier of an SRS resource determined in the other SRS resource set may be obtained based on the offset value of the SRS resource. Alternatively, the TCI state includes only an identifier of an SRS resource determined in one of the SRS resource sets. In this case, the terminal may determine, based on the preset binding relationship, an identifier of an SRS resource determined in the other SRS resource set. Because an SRS resource corresponds to a beam, the terminal may determine a corresponding beam based on an identifier of the SRS resource.

For example, the SRS resource determined in the SRS resource set is an SRS resource that meets a signal quality requirement and that is determined by the base station through SRS measurement, and may be an SRS resource having highest signal quality. In this case, the TCI state includes an identifier of an SRS resource having highest signal quality in the first SRS resource set and an identifier of an SRS resource having highest signal quality in the second SRS resource set.

The TCI state may be carried in qcl-info of CSI-RS configuration information, or may be carried in DCI.

When the TCI state is carried in the qcl-info, the terminal may receive and measure the CSI-RS based on the TCI state in the qcl-info, and report a measurement result to the network device.

When the TCI state is carried in the DCI, the terminal may receive the PDSCH or send the PUSCH based on the TCI state in the DCI.

With reference to the foregoing solution, before the method, the method further includes: reporting capability information to the network device, where the capability information includes at least one of the following:

that the terminal supports an SRS set in being configured for a maximum of N types of usage, where N is greater than or equal to 2;

that the terminal supports an SRS set in being configured for beam management + antenna switch; and

an antenna switching capability supported by the terminal, for example, 2T4R (2T4R), 1T2R, 1T4R, or 4T8R.

The foregoing solution describes the resource configuration method performed by the terminal. Corresponding to the resource configuration method, according to another aspect, this application further discloses a resource measurement method performed by a network device. The method includes:

sending configuration information to a terminal, where the configuration information includes at least a first sounding reference signal SRS resource set and a second SRS resource set, and usage of each SRS resource set is beam management + antenna switch; measuring each SRS resource, in the first SRS resource set, sent by the terminal by using a first antenna group, and measuring each SRS resource, in the second SRS resource set, sent by the terminal by using a second antenna group; and determining, based on a measurement result, an SRS resource that meets a quality requirement in the first SRS resource set and an SRS resource that meets a quality requirement in the second SRS resource set.

The foregoing method may be performed by a network device, or may be performed by a chip or a functional unit in the network device.

With reference to the foregoing solution, the method further includes:

notifying the terminal of at least one of a beam corresponding to the SRS resource that meets the quality requirement in the first SRS resource set and a beam corresponding to the SRS resource that meets the quality requirement in the second SRS resource set.

With reference to the foregoing solution, the beam corresponding to the SRS resource that meets the quality requirement is a beam corresponding to an SRS having highest signal quality.

With reference to the foregoing solution, a combination of the SRS resources in the two SRS resource sets has a preset binding relationship.

With reference to the foregoing solution, information about the beam corresponding to the SRS resource that meets the quality requirement is carried in qcl-info of channel state information reference signal CSI-RS configuration information, or is carried in downlink control information DCI.

In the foregoing method, the beam corresponding to the SRS resource may be indicated by using an SRS resource identifier.

It may be understood that some technical features in the resource configuration method according to the first aspect are also applicable to the resource measurement method performed by the network device. For details, refer to related descriptions in the resource configuration method. Details are not described again.

In the foregoing solution, because the SRS resource set configured by the network device for the terminal has two types of usage or two functions, different antenna groups of the terminal may separately perform SRS sounding in all directions, and complete antenna group switching. This helps determine an appropriate downlink beam for each antenna group, thereby improving downlink transmission efficiency.

The following describes apparatuses related to the resource configuration method and the resource measurement method.

According to one aspect, based on the foregoing resource configuration method, a communication apparatus is provided. The apparatus may be a terminal, or may be a chip or a functional unit in the terminal. The apparatus has a function of the terminal for implementing the foregoing resource configuration method and the possible implementations. The function may be implemented by hardware, or may be implemented by hardware executing corresponding software. The hardware or the software includes one or more modules corresponding to the function.

In a possible design, the apparatus includes a transceiver module. The transceiver module may include a receiving module and a sending module. The receiving module and the sending module are respectively configured to perform a receiving operation and a sending operation in the foregoing resource configuration method. For example, the receiving module is configured to receive configuration information sent by a network device, where the configuration information includes at least a first SRS resource set and a second SRS resource set, and usage of each SRS resource set is beam management + antenna switch. The sending module is configured to: send each SRS resource in the first SRS resource set by using a first antenna group, and send each SRS resource in the second SRS resource set by using a second antenna group.

The apparatus may further include a processing module, configured to perform an operation other than the sending operation and the receiving operation. The transceiver module may be a transceiver, including at least one of a receiver and a transmitter.

For other operations performed by the modules or units of the foregoing apparatus, refer to descriptions of the corresponding method.

The transceiver module may include a radio frequency circuit or an antenna. The processing module may be a processor. Optionally, the apparatus further includes a storage module, and the storage module may be, for example, a memory. When the storage module is included, the storage module is configured to store instructions. The processing module is connected to the storage module. The processing module may execute the instructions stored in the storage module or other instructions, to enable the apparatus to perform the foregoing resource configuration method and the possible implementations. In this design, the apparatus may be the terminal.

In another possible design, when the apparatus is the chip, the chip includes a transceiver module. The transceiver module may include a receiving module and a sending module. The apparatus further includes a processing module. The transceiver module may be, for example, an input/output interface, a pin, or a circuit on the chip. The processing module may be, for example, a processor. The processing module may execute instructions, to enable the chip in the terminal to perform any one of the foregoing resource configuration method and the possible implementations. Optionally, the processing module may execute instructions in a storage module, and the storage module may be a storage module in the chip, for example, a register or a cache. The storage module may alternatively be located inside a communication device but outside the chip, for example, a read-only memory (read-only memory, ROM), another type of static storage device that can store static information and instructions, or a random access memory (random access memory, RAM).

Any processor mentioned above may be a general-purpose central processing unit (CPU), a microprocessor, an application-specific integrated circuit (application-specific integrated circuit, ASIC), or one or more integrated circuits configured to control program execution of the communication methods according to the foregoing aspects.

According to another aspect, based on the foregoing resource measurement method, a communication apparatus is provided. The apparatus may be a network device, or may be a chip or a functional unit in the network device. The apparatus has a function of the network device for implementing the foregoing resource configuration and the possible implementations. The function may be implemented by hardware, or may be implemented by hardware executing corresponding software. The hardware or the software includes one or more modules corresponding to the function.

In a possible design, the apparatus includes a transceiver module. The transceiver module may include a receiving module and a sending module. The receiving module and the sending module are respectively configured to perform a receiving operation and a sending operation in the resource measurement method. The apparatus further includes a processing module, configured to perform an operation other than the sending operation and the receiving operation. The transceiver module may be a transceiver, including at least one of a receiver and a transmitter. The transceiver module may alternatively include a radio frequency circuit or an antenna. The processing module may be a processor. An example is as follows:

The transceiver module is configured to send configuration information to a terminal, where the configuration information includes at least a first sounding reference signal SRS resource set and a second SRS resource set, and usage of each SRS resource set is beam management + antenna switch.

The processing module is configured to: measure each SRS resource, in the first SRS resource set, sent by the terminal by using a first antenna group, and measure each SRS resource, in the second SRS resource set, sent by the terminal by using a second antenna group; and determine, based on a measurement result, an SRS resource that meets a quality requirement in the first SRS resource set and an SRS resource that meets a quality requirement in the second SRS resource set.

For other operations performed by the modules or units of the foregoing apparatus, refer to descriptions of the corresponding method.

Optionally, the apparatus further includes a storage module, and the storage module may be, for example, a memory. When the storage module is included, the storage module is configured to store instructions. The processing module is connected to the storage module. The processing module may execute the instructions stored in the storage module or other instructions, to enable the apparatus to perform any one of the foregoing resource configuration method or the implementations of the foregoing resource configuration method.

In another possible design, when the apparatus is the chip, the chip includes a transceiver module. The transceiver module may include a receiving module and a sending module. The apparatus further includes a processing module. The transceiver module may be, for example, an input/output interface, a pin, or a circuit on the chip. The processing module may be, for example, a processor. The processing module may execute instructions, to enable the chip in the network device to perform any one of the foregoing resource configuration method and the possible implementations.

Optionally, the processing module may execute instructions in a storage module, and the storage module may be a storage module in the chip, for example, a register or a cache. The storage module may alternatively be located inside a communication device but outside the chip, for example, a ROM, another type of static storage device that can store static information and instructions, or a RAM

Any processor mentioned above may be a CPU, a microprocessor, an application-specific integrated circuit ASIC, or one or more integrated circuits configured to control program execution of the communication methods according to the foregoing aspects.

According to another aspect, a computer storage medium is provided. The computer storage medium stores program code. The program code is used to indicate to perform the methods according to any one of the foregoing aspects and the possible implementation of the foregoing aspects.

According to another aspect, a computer program product including instructions is provided. When the computer program product runs on a computer, the computer is enabled to perform the methods according to any one of the foregoing aspects and the possible implementation of the foregoing aspects.

According to another aspect, a communication system is provided. The communication system includes the foregoing terminal and the foregoing network device.

Based on the foregoing technical solutions, the usage of the SRS resource sets is configured as antenna switch + beam management. The terminal may perform antenna panel switching between the different SRS resource sets, and SRS resources in one SRS resource set are used to select a transmit beam of one antenna panel. In this way, the terminal implements both of functions: beam selection and antenna switch, so that a downlink channel measured by the base station is no longer limited to a range of an analog beam direction. This helps improve a downlink transmission rate.

## BRIEF DESCRIPTION OF DRAWINGS

FIG. 1 is a schematic diagram of a communication system according to this application;
FIG. 2 is a schematic diagram of a MAC CE including a PDCCH CORESET TCI state;
FIG. 3 is a schematic diagram of a manner of sending an SRS by a 2T4R terminal;
FIG. 4 is a schematic diagram of SRS resource configuration performed by a 2T4R terminal according to an embodiment of this application;
FIG. 5 is a flowchart of a method for performing SRS resource configuration by a terminal according to a specific embodiment of this application;
FIG. 6 is a schematic diagram of a terminal including three antenna panels according to another specific embodiment of this application;
FIG. 7 is a schematic diagram of performing antenna panel switching by a terminal including three antenna panels according to another embodiment of this application;
FIG. 8 is a schematic block diagram of a communication apparatus according to an embodiment of this application;
FIG. 9 is a schematic diagram of a structure of a communication apparatus according to another embodiment of this application;
FIG. 10 is a schematic block diagram of a communication apparatus according to still another embodiment of this application;
FIG. 11 is a schematic diagram of a structure of a communication apparatus according to another embodiment of this application;
FIG. 12 is a schematic diagram of a communication apparatus according to another specific embodiment of this application;
FIG. 13 is a schematic diagram of a communication apparatus according to another specific embodiment of this application;
FIG. 14 is a schematic diagram of a communication apparatus according to another specific embodiment of this application; and
FIG. 15 is a schematic diagram of a communication apparatus according to another specific embodiment of this application.

## DESCRIPTION OF EMBODIMENTS

The following describes technical solutions of this application with reference to the accompanying drawings.

The technical solutions in embodiments of this application may be applied to various communication system, for example, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) system, or a new radio (new radio, NR) system.

A terminal in embodiments of this application may be user equipment, an access terminal, a subscriber unit, a subscriber station, a mobile station, a remote station, a remote terminal, a mobile device, a user terminal, a terminal device, a wireless communication device, a user agent, or a user apparatus. The terminal may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal in a future 5G network, a terminal in a future evolved public land mobile communication network (public land mobile network, PLMN), or the like. This is not limited in embodiments of this application.

A network device in embodiments of this application may be a device configured to communicate with the terminal. The network device may be a base transceiver station (base transceiver station, BTS) in a global system for mobile communications (global system for mobile communications, GSM) or a code division multiple access (code division multiple access, CDMA) system, a NodeB (NodeB, NB) in a wideband code division multiple access (wideband code division multiple access, WCDMA) system, an evolved NodeB (evolved NodeB, eNB or eNodeB) in an LTE system, or a radio controller in a cloud radio access network (cloud radio access network, CRAN) scenario. Alternatively, the network device may be a relay station, an access point, a vehicle-mounted device, a wearable device, a network device in a future 5G network, a network device in a future evolved PLMN, one antenna panel or a group of antenna panels (including a plurality of antenna panels) of a base station in a 5G system, or a network node, for example, a baseband unit (baseband unit, BBU) or a distributed unit (distributed unit, DU), that constitutes a gNB or a transmission point. This is not limited in embodiments of this application.

In some deployments, the gNB may include a centralized unit (centralized unit, CU) and the DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or may be classified into a network device in a core network (core network, CN). This is not limited in this application.

In embodiments of this application, the terminal or the network device includes a hardware layer, an operating system layer running above the hardware layer, and an application layer running above the operating system layer. The hardware layer includes hardware such as a central processing unit (central processing unit, CPU), a memory management unit (memory management unit, MMU), or a memory (also referred to as a main memory). An operating system may be any one or more types of computer operating systems, for example, a Linux operating system, a Unix operating system, an Android operating system, an iOS operating system, or a Windows operating system, that implement service processing through a process (process). The application layer includes applications such as a browser, an address book, word processing software, and instant messaging software. In addition, a specific structure of an execution body of a method provided in embodiments of this application is not specifically limited in embodiments of this application, provided that a program that records code of the method provided in embodiments of this application can be run to perform communication according to the method provided in embodiments of this application. For example, the execution body of the method provided in embodiments of this application may be the terminal or the network device, or may be a functional module that is in the terminal or the network device and that can invoke the program and execute the program.

In addition, aspects or features of this application may be implemented as a method, an apparatus or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), or a smart card and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a radio channel, and various other media that can store, include, and/or carry instructions and/or data.

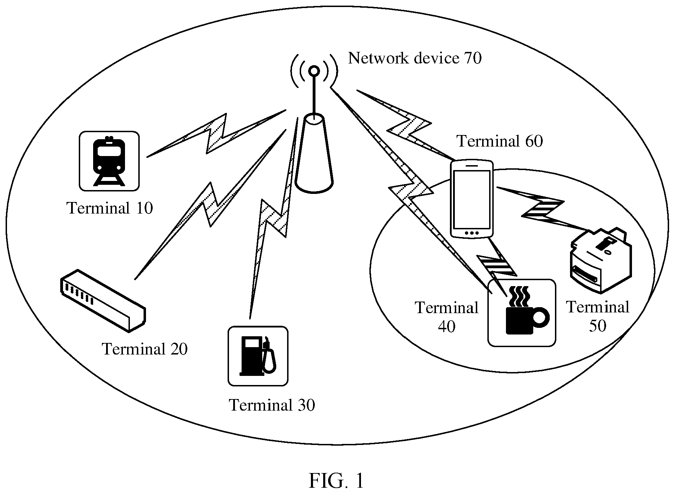

FIG. 1 is a schematic diagram of a communication system according to this application. The communication system in FIG. 1 may include at least one terminal (for example, a terminal 10, a terminal 20, a terminal 30, a terminal 40, a terminal 50, and a terminal 60) and a network device 70. The network device 70 is configured to: provide a communication service for the terminal and access a core network. The terminal may access a network by searching for a synchronization signal, a broadcast signal, or the like sent by the network device 70, to communicate with the network. The terminal 10, the terminal 20, the terminal 30, the terminal 40, and the terminal 60 in FIG. 1 may perform uplink and downlink transmission with the network device 70. For example, the network device 70 may send downlink signals to the terminal 10, the terminal 20, the terminal 30, the terminal 40, and the terminal 60, or may receive uplink signals sent by the terminal 10, the terminal 20, the terminal 30, the terminal 40, and the terminal 60.

In addition, the terminal 40, the terminal 50, and the terminal 60 may also be considered as a communication system. The terminal 60 may send downlink signals to the terminal 40 and the terminal 50, or may receive uplink signals sent by the terminal 40 and the terminal 50.

It should be noted that embodiments of this application may be applied to a communication system including one or more network devices, or may be applied to a communication system including one or more terminals. This is not limited in this application.

It should be understood that the communication system may include one or more network devices. One network device may send data or control signaling to one or more terminals. A plurality of network devices may simultaneously send data or control signaling to one or more terminals.

The following describes terms in this application in detail.

1. Beam (beam):

The beam in an NR protocol may be embodied as a spatial domain filter (spatial domain filter) that is also referred to as a spatial filter (spatial filter) or a spatial parameter (spatial parameter). A beam used to send a signal may be referred to as a transmit beam (transmit beam, Tx beam), or may be referred to as a spatial domain transmission filter (spatial domain transmission filter) or a spatial transmission parameter (spatial transmission parameter). A beam used to receive a signal may be referred to as a receive beam (receive beam, Rx beam), or may be referred to as a spatial domain receive filter (spatial domain receive filter) or a spatial reception parameter (spatial RX parameter).

The transmit beam may refer to distribution of signal strength formed in different directions in space after a signal is transmitted through an antenna, and the receive beam may refer to distribution of signal strength, in different directions in space, of a radio signal received from an antenna.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital/analog beamforming technology, or the like.

The beam usually corresponds to a resource. For example, during beam measurement, a network device sends different resources by using different beams, and a terminal feeds back measured resource quality, so that the network device knows quality of a corresponding beam. During data transmission, beam information is also indicated by using a resource corresponding to the beam information. For example, the network device indicates, by using a transmission configuration indication (Transmission Configuration Indication, TCI) field in downlink control information (downlink control information, DCI), information about a beam used by the terminal to receive a physical downlink shared channel (physical downlink shared channel, PDSCH).

Optionally, a plurality of beams that have a same communication feature or similar communication features are considered as one beam. One beam may be sent by using one or more antenna ports, and is used to transmit a data channel, a control channel, a sounding signal, and the like. The one or more antenna ports forming the beam may also be considered as one antenna port set.

During beam measurement, each beam of the network device corresponds to one resource. Therefore, a beam corresponding to a resource may be identified by using an index or an identifier of the resource.

2. Resource:

During beam measurement, a beam corresponding to a resource may be uniquely identified by using an index of the resource. The resource may be an uplink signal resource, or may be a downlink signal resource. An uplink signal includes but is not limited to a sounding reference signal (sounding reference signal, SRS) and a demodulation reference signal (demodulation reference signal, DMRS). A downlink signal includes but is not limited to a channel state information reference signal (channel state information reference signal, CSI-RS), a cell specific reference signal (cell specific reference signal, CS-RS), a UE specific reference signal (user equipment specific reference signal, US-RS), a demodulation reference signal (demodulation reference signal, DMRS), and a synchronization signal/physical broadcast channel block (synchronization signal/physical broadcast channel block, SS/PBCH block). The SS/PBCH block may be referred to as a synchronization signal block (synchronization signal block, SSB) for short.

The resource is configured by using radio resource control (radio resource control, RRC) signaling. In a configuration structure, one resource is one data structure, including a related parameter of an uplink/downlink signal corresponding to the resource, for example, a type of the uplink/downlink signal, a resource element that carries the uplink/downlink signal, sending time and a sending periodicity of the uplink/downlink signal, and a quantity of ports used to send the uplink/downlink signal. Each resource of the uplink/downlink signal has a unique index, to identify the resource of the downlink signal. It may be understood that the index of the resource may also be referred to as an identifier of the resource. This is not limited in embodiments of this application.

An association relationship in embodiments of this application may be specified in a standard, agreed upon by the network device and the terminal in advance, or indicated by the network device to the terminal.

The synchronization signal block may also be referred to as a synchronization signal/physical broadcast channel (Physical broadcast channel, PBCH) block (SS/PBCH block), and may be referred to as an SSB for short. The SSB may include at least one of a PBCH, a primary synchronization signal (primary synchronization signal, PSS), and a secondary synchronization signal (Secondary synchronization signal, SSS).

3. TCI state:

For example, the TCI state mainly includes quasi-co-location (quasi-co-location, QCL) types (where for example, two different QCL types may be configured) and a reference signal of each QCL type. The reference signal specifically includes a carrier component (carrier component, CC) identification (identification, ID) or a BWP ID of the reference signal, and a number (an ssb-index, or CSI-RS resource index) of each reference signal resource. A method for configuring the TCI state in an existing protocol is as follows:

```
TCI-State ::=                   SEQUENCE {

    tci-StateId                     TCI-StateId,

    qcl-Type1                       QCL-Info,

    qcl-Type2                       QCL-Info           OPTIONAL,     --
Need R

                ...

    }

QCL-Info ::=                    SEQUENCE {

        cell                            ServCellIndex      OPTIONAL,     --
Need R

        bwp-Id                          BWP-Id             OPTIONAL,     --
Cond CSI-RS-Indicated

        referenceSignal                 CHOICE {

            csi-rs                          NZP-CSI-RS-ResourceId,

            ssb                             SSB-Index

        },

        qcl-Type                        ENUMERATED {typeA, typeB, typeC, typeD},

            ...

    }
```

The QCL types may be classified as follows:

QCL typeA: a delay, a Doppler shift, a delay spread, and a Doppler spread;
QCL typeB: a Doppler shift and a Doppler spread;
QCL typeC: a delay and a Doppler shift; and
QCL typeD: a spatial reception parameter, namely, a receive beam.

4. Quasi-co-location (quasi-co-location, QCL):

The co-location relationship is used to indicate that a plurality of resources have one or more same or similar communication features. For the plurality of resources that have the co-location relationship, same or similar communication configurations may be used. For example, if two antenna ports have the co-location relationship, a large-scale property of a channel over which a symbol is transmitted through a port may be inferred from a large-scale property of a channel over which a symbol is transmitted through another port. The large-scale property may include a delay spread, an average delay, a Doppler spread, a Doppler shift, an average gain, a reception parameter, a receive beam number of the terminal, a transmit/receive channel correlation, an angle of arrival for reception, a spatial correlation of a receiver antenna, a dominant angle of arrival (Angle-of-Arrival, AoA), an average angle of arrival, an AoA spread, and the like. A quasi co-location parameter includes at least one of a Doppler spread, a Doppler shift, an average delay, a delay spread, and a spatial reception parameter. QCL relationships may be classified into four types: 'QCL-TypeA': {Doppler shift, Doppler spread, average delay, delay spread}; 'QCL-TypeB': {Doppler shift, Doppler spread}; 'QCL-TypeC': {Doppler shift, average delay}; and -'QCL-TypeD': {spatial reception parameter}.

5. Downlink beam training and uplink beam training:

Downlink beam training is mainly implemented by measuring and feeding back a downlink signal (an SSB and/or a CSI-RS). It may be considered that the base station uses different transmit beams to send SSBs and/or CSI-RSs having different numbers (where the transmit beams and the numbers of the SSBs/CSI-RSs are not necessarily in a one-to-one correspondence, and may also be in a one-to-many, many-to-one, or many-to-many relationship). The base station configures the terminal to perform L1-reference signal received power (reference signal received power, RSRP) measurement or L1-signal to interference plus noise ratio (signal to interference plus noise ratio, SINR) measurement on one or more specific SSBs or CSI-RSs. In addition, the terminal is required to select N appropriate SSBs or CSI-RSs, and report identifiers of numbers corresponding to the SSBs or CSI-RSs and quality (RSRPs/SINRs) corresponding to the SSBs or CSI-RSs. If the downlink signal is periodic or semi-persistent, the terminal may have a plurality of opportunities to try different receive beams during measurement. If the downlink signal is aperiodic (one-shot), the terminal may use, to perform measurement, a receive beam indicated by the base station, or may select a receive beam.

Uplink beam training is mainly implemented by configuring, by the base station, the terminal to send an uplink measurement signal (for example, an SRS). It may be considered that the terminal sends, by using different transmit beams, SRSs having different numbers (where similarly, the transmit beams and the numbers of the SRSs may be in a many-to-many relationship). The base station selects an appropriate transmit beam for the terminal by measuring quality of the different SRSs. The base station may try different receive beams during measurement. If the uplink signal is periodic or semi-persistent, the base station may have a plurality of opportunities to try different receive beams during measurement. If the uplink signal is aperiodic (one-shot), the base station may select a receive beam.

6. Downlink control channel beam:

A physical downlink control channel (physical downlink control channel, PDCCH) is used as an example. A network uses a two-level signaling structure: RRC signaling + MAC control element (Media Access Control control element, MAC CE) signaling to perform beam indication of the PDCCH. It should be noted that, in R15, beam indication of the PDCCH is implemented by performing beam indication on a control resource set (control resource set, CORESET). The network configures, for the terminal by using RRC signaling, a TCI state of a CORESET of a bandwidth part (bandwidth part, BWP) in a carrier component (Carrier component, CC). The network uses a MAC CE to indicate, to a CORESET of a BWP in a CC of the terminal, a TCI state for transmission of a target CORESET. A number of a CORESET is unique in a CC.

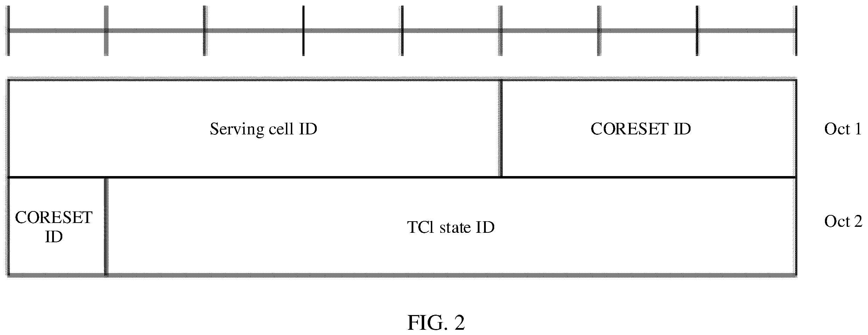

FIG. 2 shows a structure of a MAC CE including a PDCCH CORESET TCI state in R15. It can be learned that the signaling carries a plurality of fields, including a CC ID (serving cell ID) field and a CORESET ID field.

Configuration information in this application may be configured by the network device and delivered to the terminal. The configuration information may be carried in any one of a physical broadcast channel (physical broadcast channel, PBCH), remaining minimum system information (remaining minimum system information, RMSI), a system information block (system information block, SIB) 1, an SIB 2, an SIB 3, a media access control control element (media access control control element, MAC CE), downlink control information (downlink control information, DCI), radio resource control (radio resource control, RRC), and system information.

It should be noted that, with continuous development of technologies, the terms in embodiments of this application may change, but all of the terms fall within the protection scope of this application.

In 3GPP R15/R16, different SRS resource sets (SRS resource set) have different usage or functions. In R15, four types of usage of SRS resource sets are defined.

The four types of usage are beam management (beamManagement), codebook-based uplink data transmission (codebook for short), noncodebook-based uplink data transmission (nonCodebook for short), and antenna switching (antennaSwitching). The base station may configure usage (usage) of each SRS resource set (SRS resource set), and notify the terminal of the usage of the SRS resource set by using RRC.

The four types of usage can be simply marked by BM, CB, NCB, and AS. The SRS resource set in R16 further supports usage: mobility (Mobility) and positioning (Positioning) in addition to the foregoing four functions.

Specifically, the SRS resource set is configured as follows:

SRS-ResourceSet ::=                    SEQUENCE {

srs-ResourceSetId (SRS resource set identifier)     SRS-ResourceSetId,

srs-ResourceIdList (SRS resource in the resource set)     SEQUENCE

(SIZE(1..maxNrofSRS-ResourcesPerSet)) OF SRS-ResourceId (SRS resource identifier)

resourceType (time domain behavior of the SRS resource set: periodic, aperiodic, or semi-

persistent)     CHOICE {

     aperiodic     SEQUENCE {

          aperiodicSRS-ResourceTrigger     INTEGER (1..maxNrofSRS-

TriggerStates-1),

          csi-RS     (associated downlink reference signal)

                    NZP-CSI-RS-

ResourceId

          slotOffset     INTEGER (1..32)

     },

     semi-persistent     SEQUENCE {

          associatedCSI-RS     NZP-CSI-RS-ResourceId

     },

     periodic     SEQUENCE {

          associatedCSI-RS     NZP-CSI-RS-ResourceId

     }

},

usage     (function of the SRS resource set, namely, the following SetUse)

          ENUMERATED {beamManagement,

codebook, nonCodebook, antennaSwitching},

     alpha     (power control parameter)     Alpha

     p0     (power control parameter)     INTEGER (-202..24)

     pathlossReferenceRS     (power control parameter)     CHOICE {

          ssb-Index     SSB-Index,

          csi-RS-Index     NZP-CSI-RS-ResourceId

     }

     srs-PowerControlAdjustmentStates     (power control parameter)

          ENUMERATED {sameAsFci2,

separateClosedLoop}

}

Each SRS resource is configured as follows:

```
SRS-Resource ::=                              SEQUENCE {

    srs-ResourceId  (SRS resource identifier)              SRS-ResourceId,

    nrofSRS-Ports   (quantity of ports of the SRS resource)    ENUMERATED    {port1,
ports2, ports4},

    ptrs-PortIndex   (phase noise related port)              ENUMERATED {n0, n1}

    transmissionComb    (SRS resource sending method)              CHOICE {

        n2                              SEQUENCE {

            combOffset-n2                      INTEGER (0..1),

            cyclicShift-n2                     INTEGER (0..7)

        },

        n4                              SEQUENCE {

            combOffset-n4                      INTEGER (0..3),

            cyclicShift-n4                     INTEGER (0..11)

        }

    },

    resourceMapping          (SRS resource resource mapping-time domain resource)

                                        SEQUENCE {

        startPosition                     INTEGER (0..5),

        nrofSymbols                       ENUMERATED {n1, n2, n4},

        repetitionFactor                  ENUMERATED {n1, n2, n4}

    },

    freqDomainPosition  (SRS resource resource mapping-frequency domain resource)

                                        INTEGER (0..67),

    freqDomainShift        (SRS resource resource mapping-frequency domain resource)

                                        INTEGER (0..268),

    freqHopping          (SRS resource frequency hopping method)

                                        SEQUENCE {

        c-SRS                             INTEGER (0..63),
```

```
        b-SRS                              INTEGER (0..3),

        b-hop                              INTEGER (0..3)

    },

    groupOrSequenceHopping      (SRS resource frequency hopping method)

                                          ENUMERATED    {neither,    groupHopping,
sequenceHopping},

    resourceType    (time domain behavior of the SRS resource set: periodic, aperiodic, or semi-
persistent)                                                          CHOICE {

        aperiodic                         SEQUENCE {

        },

        semi-persistent                   SEQUENCE {

            periodicityAndOffset-sp                    SRS-PeriodicityAndOffset,

        },

        periodic                          SEQUENCE {

            periodicityAndOffset-p                     SRS-PeriodicityAndOffset,

        }

    },

    sequenceId                         BIT STRING (SIZE (10)),

    spatialRelationInfo      (transmit beam indication of the SRS resource)

                                          SRS-SpatialRelationInfo

    }
```

The transmit beam indication of the SRS is configured as follows:

```
SRS-SpatialRelationInfo ::=          SEQUENCE {

        servingCellId     CC in which a reference signal indicated by a transmit beam is located

                                                                ServCellIndex

        referenceSignal            reference signal indicated by the transmit beam

                                                                CHOICE {

                ssb-Index                        SSB-Index,

                csi-RS-Index                     NZP-CSI-RS-ResourceId,

                srs                              SEQUENCE {

                        resourceId                       SRS-ResourceId,

                        uplinkBWP                        BWP-Id

                }

            }

        }
```

In 3GPP R15/R16, different restrictions are imposed on SRS resource sets having different usage. For example, the following shows a restriction on the SRS in R15.

BeamManagement: SRS resources in one SRS resource set cannot be simultaneously sent, but SRS resources in different SRS resource sets can be simultaneously sent. A maximum of eight SRS resource sets are configured. Each SRS resource set includes one or more SRS resources, and a maximum of 16 SRS resources are included.

AntennaSwitching: An SRS resource is used to obtain a downlink channel. For example, in 2T4R (2T4R), one SRS resource set is usually configured (where one periodic SRS and one aperiodic SRS resource set may each be configured). The SRS resource set includes two SRS resources, and each SRS resource is a two-port (port) resource.

Codebook: One SRS resource set is configured. The SRS resource set includes one or two SRS resources.

NonCodebook: One SRS resource set is configured. The SRS resource set includes one or more SRS resources, and a maximum of four SRS resources are included. Each SRS resource is a one-port resource.

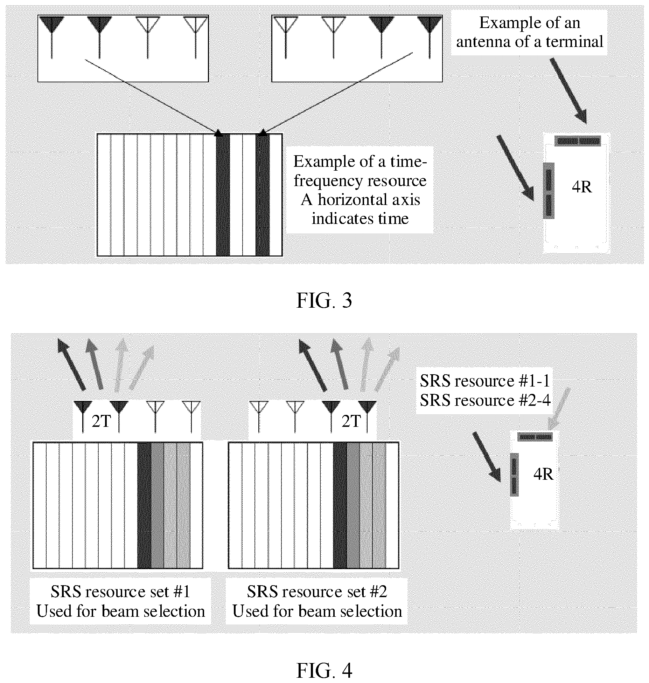

In 3GPP R15/R16, the base station may configure an SRS resource for the terminal, and measure an SRS sent by the terminal, to determine information about a downlink channel. Because the terminal has different capabilities, implementation of this function varies with the capabilities of the terminal. For example, in a case, the terminal supports a function: antenna switch. Due to reasons such as power consumption, a quantity of available uplink transmit antennas is less than a quantity of available downlink receive antennas. For example, the terminal reports, to the base station, that the terminal supports '2T4R'. The base station determines the downlink channel by measuring the SRS periodically sent by the terminal. Therefore, the base station may configure one periodic SRS resource set for the terminal. The SRS resource set includes two different SRS resources, and each resource is associated with two different antenna ports. In other words, each SRS resource is a two-port (port) resource. The terminal may send the SRS by using the method shown in FIG. 3, so that the base station can obtain the information about the downlink channel by measuring the SRS.

Refer to FIG. 3. The terminal includes two antenna panels, and each antenna panel includes two antenna ports. The terminal sends an SRS on the 1st SRS resource through two antenna ports of a first antenna panel, and sends an SRS on the 2nd SRS resource through two antenna ports of a second antenna panel. The base station may determine, by measuring quality of the signals received on the two SRS resources, a channel on which the terminal performs receiving through the four antenna ports, namely, quality of a downlink channel corresponding to the four receive antenna ports of the terminal.

In the foregoing example, the antennas of the terminal are abstracted into a linear arrangement form. A gray square represents a transmit antenna used by the terminal. It can be learned that the terminal has a '2T4R' capability. In other words, the terminal has four antennas, where the four antennas can be simultaneously used for receiving, but two of the four antennas can be simultaneously used for transmission. In addition, FIG. 3 further provides a schematic diagram of a time-frequency resource, which mainly shows a time position of the SRS sent by the terminal. For example, FIG. 3 shows a slot that is defined in an NR standard and that has 14 orthogonal frequency division multiplexing (orthogonal frequency division multiplexing, OFDM) symbols. The terminal sends the 1st SRS resource on the 10th symbol in the slot (or the last but four symbol in the slot) through two antennas on the left, and sends the 2nd SRS resource on the 13th symbol in the slot (or the last but one symbol in the slot) through two antennas on the right. A time interval between the two transmissions is a guard period used by the terminal for antenna switching.

In this application, sending an SRS resource may also be understood as sending an SRS on the configured SRS resource.

In the foregoing solution, one SRS resource set can be configured for only one type of usage. To be specific, the base station indicates one type of usage (usage), namely, antenna switching AS, for one SRS resource set by using higher layer signaling. In the foregoing solution, in an existing protocol, transmit beams of SRS resources in the SRS resource set used for antenna switching need to have a same configuration. In other words, in the foregoing solution, the downlink channel is actually determined on a given analog beam after analog beam selection has been completed. The terminal separately sends the plurality of SRS resources in the SRS resource set through transmit antenna switching, and the SRS resources are sent by using a same analog beam, that is, toward a specific azimuth. Consequently, in this manner of determining the downlink channel, a sounding range is limited, and sounding cannot be performed in channel ranges in a plurality of directions. The finally determined downlink channel may cause degradation of downlink transmission performance.

In a resource configuration method provided in this embodiment, an SRS resource set is configured for a plurality of types of usage, and a base station may have a plurality of types of usage by configuring one SRS resource set (or more SRS resource sets).

Embodiment 1: Usage of the SRS resource set is configured as composite usage, for example, functions: beam management + antenna switch. If a terminal has a plurality of antenna groups, the terminal may perform antenna switching between different configured SRS resource sets, where the antenna switching may be specifically antenna group switching. For a same antenna group, beam selection is performed between different SRS resources in a same SRS resource set. In this way, each group of antennas used to send an SRS can find a most appropriate beam direction, so that more accurate channel information is obtained, and higher-rate downlink transmission can be supported.

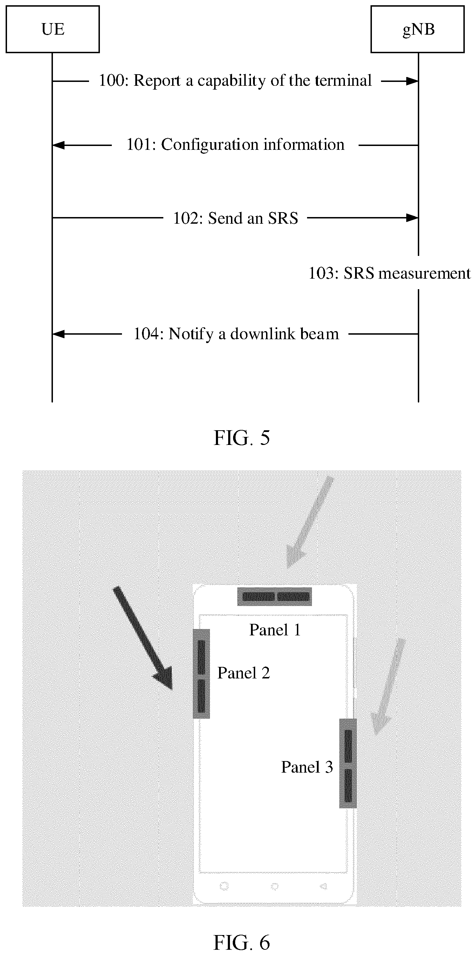

Refer to FIG. 5. The resource configuration method includes the following steps.

100: Report a capability of the terminal.

It is assumed that the capability of the terminal in this embodiment is 2T4R (2T4R). Similar to the terminal in FIG. 3, the terminal in FIG. 4 includes two antenna panels, and each antenna panel includes two antennas (or antenna ports). Therefore, one antenna panel may be considered as one antenna group, and the antenna group includes two antennas. Certainly, two antenna groups may alternatively be located on one antenna panel. This is not limited in this embodiment.

Usually, one antenna may be associated with one port, or may be associated with a plurality of ports. An antenna panel may be considered as an antenna group, and the antenna group may also be referred to as an antenna port group.

The terminal may report, to a base station, one or more of the following capabilities:

an antenna switch capability supported by the terminal, for example, '2T4R' in this embodiment; a quantity of transmit antenna panels and/or receive antenna panels of the terminal, where for example, in this embodiment, the terminal has two transmit antenna panels and two receive antenna panels, and
optionally, the antenna switch capability supported by the terminal may further include two '2T2R', that is, include two antenna panels, each antenna panel includes two antennas (or antenna ports), and both the two antennas may be used for uplink transmission and downlink receiving;
a quantity of transmit beams and/or receive beams of the terminal, where for example, in this embodiment, it is assumed that a quantity of beams supported by each transmit antenna panel of the terminal is 4;
transmit antenna panel switching time of the terminal; and
transmit antenna panel activation time of the terminal.

The antenna panel may also be replaced with an antenna group.

Capabilities related to an SRS configuration are described below, and may include one or more of the following capabilities:

whether the terminal supports an SRS set in being configured for at least one type of usage;
that the terminal supports an SRS set in being configured for a maximum of N types of usage, where N is greater than or equal to 2;
whether the terminal supports an SRS set in being configured for usage: BM+AS; or

types of usage configured for an SRS set, where the terminal supports the SRS set in being configured for the usage. For example, the usage may be a combination of any two or more of BM, CB, NCB, and AS, or may be a combination of any two or more of BM, CB, NCB, AS, mobility, and positioning. An example in which the terminal supports the SRS set in being configured for BM+AS is used for description in this embodiment.

101: The base station sends configuration information to the terminal, where the configuration information may be sent by using RRC.

The configuration information concerned in this embodiment is an SRS-related configuration. Usually, the base station needs to determine an appropriate configuration parameter based on capability information reported by the terminal and an actual scheduling requirement. The configuration performed by the base station for the terminal cannot exceed the capability of the terminal. The configuration information may include the following content.

For example, an SRS resource set is configured for the terminal based on the capability information fed back by the terminal in 100. For example, if the capability of the terminal is 2T4R, because 4/2 = 2, the base station may configure two SRS resource sets for the terminal. Each SRS resource set includes a plurality of SRS resources, for example, four SRS resources. A quantity of resources may be determined based on a quantity of beams. Because the terminal supports 2T, each SRS resource is a two-port resource, and may be sent through two antenna ports.

If the capability of the terminal is 4T8R, two or four SRS resource sets may be configured. Each SRS resource is a four-port resource.

Usage (usage) of the two SRS resource sets is configured as 'beam management BM + antenna switch AS'. The base station may send explicit signaling for configuration.

The terminal may perform antenna switching between the different SRS resource sets based on the configuration information. SRS resources in one SRS resource set are used for beam management. For example, the different SRS resource sets are sent through different antenna panels of the terminal. SRS resources in one SRS resource set are used for beam management of one antenna panel. In other words, SRS resources in one SRS resource set are sent through different beams of one antenna panel. Optionally, this setting may be predefined in a protocol. In other words, if the base station indicates, to the terminal, that the usage of the plurality of SRS resource sets is BM + AS, the terminal needs to send the SRS resources by using the foregoing method.

Further, a transmission time interval T between the two SRS resource sets may be configured. Optionally, T is greater than or equal to the transmit antenna panel activation and/or switching time in the capabilities reported by the terminal, so that a guard period (guard period) is reserved for the terminal to perform transmit antenna panel switching or transmit antenna panel reactivation. Optionally, T is less than or equal to a set time threshold, and the time threshold is related to channel coherence time (channel coherence time). The coherence time means that a channel characteristic does not change or changes slowly during this period of time. The coherent time is usually related to a position and a movement speed of the base station relative to the terminal and a movement direction (or is related to a maximum Doppler shift), to ensure that the base station can obtain an accurate 4R channel when the channel does not change or only slightly changes.

The time interval T herein may be a difference between start time of the 1st SRS resources in the two SRS resource sets, or may be a difference between end time of the last SRS resource in the 1st SRS resource set and start time of the 1st SRS in the 2nd SRS resource set.

Optionally, a transmission time interval t between SRS resources in each SRS resource set may be further configured. If t is configured, t is mainly used to reserve a guard period for the terminal to switch between different transmit beams on a same transmit panel.

Further, it may be further configured that path loss estimation reference signals (path loss reference signal) of the two SRS resource sets are the same. Optionally, it may be further configured that other transmit power-related parameters, for example, reference powers P0 and path loss compensation coefficients alpha, of the two SRS resource sets are the same. This is to ensure that the terminal can send the SRS resources in the two sets by using a same transmit power. In this way, when performing beam selection through SRS measurement, the base station evaluates only beam quality without being affected by a transmit power deviation. For comparison, in a current technology, only one path loss estimation reference signal is configured for each SRS resource set. In other words, in the current technology, it is ensured that transmit powers in one SRS resource set are the same. However, in this embodiment, because a plurality of types of usage are configured for one SRS resource set, or two different SRS resource sets jointly implement functions: beam selection and antenna switch, transmit powers of the two different SRS resource sets are also the same.

Further, it may be further configured that time domain behavior (time domain behavior) of the two SRS resource sets is the same. The time domain behavior usually refers to one of periodic, semi-persistent, and aperiodic.

102: The terminal sends an SRS based on the configuration information.

Based on a configuration of the base station, the terminal sends each SRS resource in a first SRS resource set through a first antenna panel (namely, a first antenna group), and sends each SRS resource in a second SRS resource set through a second antenna panel (namely, a second antenna group).

As shown in FIG. 4, the terminal may send different SRS resources in an SRS resource set through different transmit beams. In the figure, gray 2T (transmit antenna) on the left is located on the first antenna panel and corresponds to four beams, and gray 2T on the right is located on the second antenna panel and corresponds to four beams.

For example, the terminal sends a first SRS resource in the first SRS resource set (SRS resource set #1) through the first antenna panel by using a first beam; the terminal sends a second SRS resource in the first SRS resource set through the first antenna panel by using a second beam; the terminal sends a third SRS resource in the first SRS resource set through the first antenna panel by using a third beam; and the terminal sends a fourth SRS resource in the first SRS resource set through the first antenna panel by using a fourth beam.

In the foregoing process, the terminal sends the SRS resources through the first antenna panel (including two antenna ports) by sequentially using a plurality of beams, to perform beam sweeping; and switches to the second antenna panel after completing SRS sending through the first antenna panel.

Similarly, the terminal sends the SRS resources through the second antenna panel (including two antenna ports) by sequentially using a plurality of beams, to perform beam sweeping.

Similarly, the terminal sends a first SRS resource in the second SRS resource set (SRS resource set #2) through the second antenna panel by using a first beam; the terminal sends a second SRS resource in the second SRS resource set through the second antenna panel by using a second beam; the terminal sends a third SRS resource in the second SRS resource set through the second antenna panel by using a third beam; and the terminal sends a fourth SRS resource in the second SRS resource set through the second antenna panel by using a fourth beam.

That the terminal sends an SRS resource may be understood as that the terminal sends an SRS on the allocated SRS resource, to help the base station perform SRS measurement.

If the configured SRS resource is a periodic resource, the foregoing beam sweeping process may be periodically repeated.

Therefore, in the foregoing process, the terminal performs antenna panel switching, and completes a beam scanning process through each of the two antenna panels, so that the base station can respectively determine, through SRS measurement, available beams corresponding to the two antenna panels.

Optionally, a combination of the SRS resources in the two SRS resource sets has a preset binding relationship. An example is as follows:

The terminal may send, by using a same transmit beam, SRS resources whose identifiers (ID) are in a same order in the two SRS resource sets. For example, the terminal sends, by using a first transmit beam on the first antenna panel, an SRS resource having a smallest identifier in the first SRS resource set, and sends, by using a transmit beam that is on the second antenna panel and that is in a same direction as the first transmit beam, an SRS resource having a smallest identifier in the second SRS resource set. For example, in FIG. 4, a same transmit beam is used for the last but four SRS resource in the first SRS resource set and the last but four SRS resource in the second SRS resource set.

In addition, in another embodiment, the terminal may alternatively send, by using different transmit beams, SRS resources whose IDs are in a same order in the two SRS resource sets. To be specific, the terminal sends, by using a first transmit beam on the first antenna panel, an SRS resource having a smallest identifier in the 1st SRS resource set, and sends, by using a transmit beam that is on the second antenna panel and that is in a direction different from the first transmit beam, an SRS resource having a smallest identifier in the 2nd SRS resource set. For example, in FIG. 4, different transmit beams are used for the last but four SRS resource in the first SRS resource set and the last but four SRS resource in the second SRS resource set.

103: The base station determines a downlink beam and a downlink channel of the terminal through SRS measurement.

The base station may respectively measure SRSs sent by the terminal through the two antenna panels in different beam directions, to determine a direction of a beam that meets a quality requirement. For example, beams corresponding to SRSs that have highest quality and that are sent through the two antenna panels may be used as downlink beams of the terminal.

The base station may measure received signal quality corresponding to a plurality of SRS resources in one SRS resource set, and determine, based on a measurement result, a downlink beam corresponding to an antenna panel (antenna group). A downlink beam corresponding to an SRS having highest received signal quality may be used as an available downlink beam of the antenna panel, to facilitate downlink transmission. For example, the base station may perform beam selection based on an SRS-RSRP, or may perform beam selection in another measurement manner.

In this embodiment, the base station may perform beam selection for the 1st transmit antenna panel of the terminal by measuring signal quality of a plurality of SRS resources in the 1st SRS resource set, and may perform beam selection for the 2nd transmit antenna panel of the terminal by measuring signal quality of a plurality of SRS resources in the 2nd SRS resource set.

For example, as shown in FIG. 4, the base station determines, through SRS measurement, that the first SRS resource in the first SRS resource set (the last but four SRS resource in the SRS resource set #1) is an SRS resource having highest quality. Because the SRS resource is sent by using the first beam on the first antenna panel, the base station determines that the first beam is an appropriate beam for the first antenna panel.

Similarly, the base station determines, through SRS measurement, that the fourth SRS resource in the second SRS resource set (the last but one SRS resource in the SRS resource set #2) is an SRS resource having highest quality. Because the SRS resource is sent by using the fourth beam on the second antenna panel, the base station determines that the fourth beam is an appropriate beam for the second antenna panel.

The first beam and the fourth beam are transmit beams of the terminal. During downlink transmission, due to consistency between receive and transmit beams, the first beam and the fourth beam are used as receive beams.

Measuring an SRS resource may also be understood as measuring an SRS sent on the SRS resource.

In another embodiment, SRS resources in one SRS resource set may alternatively be sent by using a same beam. In this case, the SRS resources can be used for beam management of the base station, so that the base station selects an appropriate available beam.

In addition, the base station may obtain two 2T uplink channels by measuring the SRS resources in each of the two SRS resource sets, and combine the two 2T uplink channels to determine a 4R downlink channel. To be specific, information about an uplink channel having two antenna ports may be determined by measuring SRS resources in one SRS resource set, and information about an uplink channel having four antenna ports may be determined by measuring SRS resources in two SRS resource sets, so that information about a corresponding downlink channel having four antenna ports is determined.

It may be understood that different channels may be obtained in different SRS resource combination manners.

For example, it is assumed that the base station also has four antennas for receiving. The base station may obtain, by measuring a signal of a two-antenna SRS resource 1, the following uplink channel:

$$H^{SRS1} = \begin{pmatrix} h_{1,1}^1 & h_{2,1}^1 \\ h_{1,2}^1 & h_{2,2}^1 \\ h_{1,3}^1 & h_{2,3}^1 \\ h_{1,4}^1 & h_{2,4}^1 \end{pmatrix},$$

where

each element represents a channel from a terminal antenna to a base station antenna. For example, a subscript of $h_{1,1}^1$ represents a base station receive antenna 1 and a terminal transmit antenna 1, and a superscript 1 represents a transmit beam 1. Similarly, the base station may obtain, by measuring a signal of a two-antenna SRS resource 8, the following uplink channel:

$$H^{SRS8} = \begin{pmatrix} h_{3,1}^4 & h_{4,1}^4 \\ h_{3,2}^4 & h_{4,2}^4 \\ h_{3,3}^4 & h_{4,3}^4 \\ h_{3,4}^4 & h_{4,4}^4 \end{pmatrix},$$

where

a superscript 4 indicates that the SRS resource is sent by using a transmit beam 4.

The base station may obtain, with reference to measurement results of the two SRS resources (the SRS resource 1 and the SRS resource 8), the following uplink channel including the transmit beam 1 and the transmit beam 4:

$$H^{UL} = \begin{pmatrix} h_{1,1}^1 & h_{2,1}^1 & h_{3,1}^4 & h_{4,1}^4 \\ h_{1,2}^1 & h_{2,2}^1 & h_{3,2}^4 & h_{4,2}^4 \\ h_{1,3}^1 & h_{2,3}^1 & h_{3,3}^4 & h_{4,3}^4 \\ h_{1,4}^1 & h_{2,4}^1 & h_{3,4}^4 & h_{4,4}^4 \end{pmatrix}.$$

According to reciprocity between uplink and downlink channels, the base station may infer that if the terminal uses, on a downlink, a 4R receive channel that includes a receive beam corresponding to the transmit beam 1 and a receive beam corresponding to the transmit beam 4, the channel is a conjugate transposition of the uplink channel, that is:

$$H_{1,4}^{DL} = \left(H_{1,4}^{UL}\right)^* = \begin{pmatrix} h_{1,1}^1 & h_{2,1}^1 & h_{3,1}^4 & h_{4,1}^4 \\ h_{1,2}^1 & h_{2,2}^1 & h_{3,2}^4 & h_{4,2}^4 \\ h_{1,3}^1 & h_{2,3}^1 & h_{3,3}^4 & h_{4,3}^4 \\ h_{1,4}^1 & h_{2,4}^1 & h_{3,4}^4 & h_{4,4}^4 \end{pmatrix}^*.$$

It is easy to understand that if the base station measures an SRS resource 6 (sent by using a transmit beam 2), the base station may obtain another uplink channel:

$$H^{SRS6} = \begin{pmatrix} h_{3,1}^2 & h_{4,1}^2 \\ h_{3,2}^2 & h_{4,2}^2 \\ h_{3,3}^2 & h_{4,3}^2 \\ h_{3,4}^2 & h_{4,4}^2 \end{pmatrix}.$$

With reference to the SRS resource 1 and the SRS resource 2, the base station may infer that if the terminal uses, on the downlink, a 4R receive channel that includes a receive beam corresponding to the transmit beam 1 and a receive beam corresponding to the transmit beam 2, the channel is:

$$H_{1,2}^{DL} = \left(H_{1,2}^{UL}\right)^* = \begin{pmatrix} h_{1,1}^1 & h_{2,1}^1 & h_{3,1}^2 & h_{4,1}^2 \\ h_{1,2}^1 & h_{2,2}^1 & h_{3,2}^2 & h_{4,2}^2 \\ h_{1,3}^1 & h_{2,3}^1 & h_{3,3}^2 & h_{4,3}^2 \\ h_{1,4}^1 & h_{2,4}^1 & h_{3,4}^2 & h_{4,4}^2 \end{pmatrix}^*.$$

Clearly, $H_{1,4}^{DL}$ and $H_{1,2}^{DL}$ are two different downlink channels that can support different maximum channel capacities and that have different receiving requirements on the terminal. Therefore, for proper scheduling, the base station needs to select a group of beams having larger channel capacities, for example, the receive beam corresponding to the transmit beam 1 and the receive beam corresponding to the transmit beam 2, and notifies the terminal of the information.

Optionally, a combination of the SRS resources in the two SRS resource sets has a preset binding relationship. For example, a channel obtained by measuring the 1st SRS resource (having the smallest identifier) in the first SRS resource set and the 1st SRS resource in the second SRS resource set may be different from a channel obtained by measuring the 1st SRS resource (having the smallest identifier) in the first SRS resource set and the 2nd SRS resource in the second SRS resource set.

A possible selection method of the base station includes: combining SRS resources having highest received signal strength in the SRS resource sets, combining SRS resources that are in a same order in the SRS resource sets, and the like.

It may be understood that the 4R downlink channel obtained by the base station is a 4R channel on the premise that beams of two antenna panels of the terminal are consistent during receiving and sending, that is, the terminal maintains consistency between receive and transmit beams. The consistency between receive and transmit beams is also referred to as beam correspondence, and may be simply understood as that a beam direction for receiving a signal and a beam direction for transmitting a signal are the same or have a small deviation.

A purpose of determining the downlink channel of the terminal by the base station is to prepare for adjusting transmission parameters such as a modulation and coding scheme for data transmission, a quantity of streams, and a frequency domain resource, so that the transmission parameters match a channel condition, and the base station performs data transmission. For example, higher channel quality indicates a higher modulation and coding order that can be supported and higher transmission efficiency on a time-frequency resource unit.

In addition, the purpose further includes adjusting a multi-user scheduling policy. For example, a user having good channel quality is preferentially scheduled. This helps increase an overall capacity of a cell.

104: The base station notifies the terminal of a receive beam used for downlink transmission.

The base station may notify the terminal of identifiers of SRS resources that have highest quality and that correspond to the two antenna panels, where the SRS resources are determined through measurement. Because one SRS is sent by using one beam, the terminal may learn of available beams of the two antenna panels. The terminal may receive, by using the available beams, a downlink signal or downlink data sent by the base station, or may send an uplink signal or uplink data to the base station by using the available beams.

In an example, the base station may notify the terminal of information about the receive beam by using a TCI state, and then the terminal may receive, by using the receive beam notified by the base station, downlink data or a downlink signal sent by the base station.

The base station may perform beam configuration by configuring the TCI state. The TCI state is usually configured by using RRC signaling. The base station may configure one or more TCI states. When the base station needs to indicate the terminal to perform beam switching, the base station may notify the terminal of different TCI state identifiers (TCI state ID).

In this embodiment, the following shows content included in a typical TCI state, and a most related part is that an SRS is used as a QCL-type E reference signal. In addition, the TCI state further includes information such as a TCI state ID, and a cell ID and a BWP ID of the reference signal.

A QCL type E is a QCL type newly defined for the method in this embodiment, and is used to indicate that a transmit beam and a receive beam have consistency about a spatial domain parameter. In other words, the QCL type E indicates that the terminal may perform downlink receiving by using a receive beam corresponding to a transmit beam of an SRS. The downlink receiving herein includes but is not limited to PDSCH receiving, PDCCH receiving, PDSCH-DMRS receiving, PDCCH-DMRS receiving, and CSI-RS receiving. Optionally, in this embodiment, the terminal sends the different SRS resources through the two antenna panels. Therefore, the QCL-type E reference signal may also include two SRS resource identifiers.

```
TCI-State ::=                          SEQUENCE {

tci-StateId                                TCI-StateId,

     qcl-Type1                             QCL-Info,

     qcl-Type2                             QCL-Info

     ...

}

QCL-Info ::=                            SEQUENCE {

     cell                                  ServCellIndex

     bwp-Id                                BWP-Id

     referenceSignal                       CHOICE {

          SRS1SRS-ResourceId,

          SRS2                             SRS-ResourceId, optional

          },

     qcl-Type                             QCL TypeE,

     ...

}
```

When the TCI state is used for PDCCH receiving, in addition to configuring a plurality of TCI states in RRC, the base station may further use the MAC CE signaling shown in FIG. 2 to notify the terminal of a TCI state ID corresponding to a TCI state that needs to be used.

When the TCI state is used for PDSCH receiving, in addition to configuring a plurality of TCI states in RRC, the base station may further use a TCI field in DCI to notify the terminal of a TCI state ID corresponding to a TCI state that needs to be used.

When the TCI state is used for CSI-RS receiving, in addition to configuring a plurality of TCI states in RRC, the base station may further specifically configure a qcl-info parameter of each CSI-RS resource in RRC, to notify the terminal of a CSI-RS resource and a TCI state ID corresponding to a TCI state that needs to be used to receive the CSI-RS resource.

The following operations are optional operations. The terminal may perform downlink data or signal transmission with the base station by using the obtained downlink beam, or may perform the foregoing data or signal transmission by using the obtained downlink beam. An example is as follows:

105: The base station sends a CSI-RS, and the terminal measures the downlink channel. This process is optional.

After the base station determines the 4R downlink channel of the terminal, the base station and the terminal may perform subsequent downlink transmission, for example, data transmission, on the determined 4R channel. Alternatively, downlink CSI measurement and reporting may be triggered again. This operation is optional. A main reason is that channel information obtained through uplink SRS measurement cannot reflect interference information that may occur during downlink transmission. Therefore, the 4R downlink channel may be corrected through downlink measurement and reporting.

Usually, to obtain the interference information, during downlink CSI measurement, an additional interference measurement resource may be configured in addition to a channel measurement resource.

Usually, in a downlink CSI measurement process, the resource used for downlink CSI measurement is a CSI-RS resource. Correspondingly, the interference measurement resource is also a CSI-RS resource.

In this operation, because the downlink beam of the terminal has been determined in 103, the base station may indicate the terminal how to receive the CSI-RS. In the current technology (R15/16), the base station may notify, by configuring qcl-info of a CSI-RS resource in RRC, the terminal of how to measure the CSI-RS resource. A TCI state is assigned to a qcl-info field, to indicate a downlink beam of the terminal. In an embodiment, for a specific indication manner, refer to descriptions of 104.

In this embodiment, similarly, the base station may notify, by using the qcl-info field, the terminal of how to receive the CSI-RS resource, and in particular, notify the terminal of an analog beam for receiving the CSI-RS. In 103, the base station determines a downlink receive beam of the terminal by measuring the SRS. Therefore, the qcl-info may include information related to the SRS.

Further, the qcl-info, namely, the TCI state, needs to include information related to the at least one SRS resource. The information may be notified in a plurality of possible manners. Examples are as follows:

1. The TCI state includes two SRS resource identifiers, for example, an identifier of the last but four SRS resource in the SRS resource set #1 and an identifier of the last but one SRS resource in the SRS resource set #2.

Alternatively, the TCI state includes one SRS resource identifier and an offset value of the SRS resource identifier. After the SRS resource identifier is obtained, another SRS resource identifier may be obtained based on the offset value of the SRS resource identifier.

2. The TCI state includes one SRS resource identifier. This manner is applicable to a case in which a combination of the SRS resources in the two SRS resource sets has a preset binding relationship when the terminal performs sending in 102 or the base station performs selection in 103. After the SRS resource identifier is obtained, another SRS resource identifier may be obtained based on the preset binding relationship.

The terminal may receive, based on the notification of the base station by using a corresponding beam, the CSI-RS sent by the base station, and perform measurement to determine an appropriate downlink channel. This process is not described in detail.

106: The base station schedules PDSCH transmission.

In the current technology, the base station may schedule a PDSCH by using DCI, and include a TCI field in the DCI to indicate a TCI state corresponding to the PDSCH transmission.

In this embodiment, similarly, the base station may notify, by using the TCI state, the terminal of how to receive the PDSCH.

In an embodiment, for specific content in the TCI state and a notification manner of the TCI state, refer to the descriptions of 104.

The terminal may receive, by using the receive beam notified by the base station, the PDSCH sent by the base station or downlink information such as a PDCCH or a CSI-RS.

107: The base station schedules PUSCH transmission.

In addition, when the base station indicates the terminal to send uplink data, that is, perform physical uplink shared channel (physical uplink shared channel, PUSCH) transmission, the base station notifies the terminal of to-be-used precoding information by indicating an SRS resource identifier (SRS resource indicator/index, SRI) in the DCI. The SRI can only be an identifier of an SRS resource configured for CB or NCB, and cannot be an identifier of an SRS resource configured for BM or AS. Therefore, if the base station needs to notify the terminal to update a transmit beam of the PUSCH, a transmit beam of the SRS resource for the CB/NCB needs to be updated first, resulting in complex signaling overheads.

In this embodiment, the base station may notify, by configuring the unified TCI state, the terminal of how to send the PUSCH. For an example of specific content in the unified TCI state, refer to the descriptions of 104.

The terminal may send the PUSCH to the base station by using the receive beam notified by the base station.

In another embodiment, the following shows content included in a typical TCI state used for the PUSCH, and a most related part is that an SRS is used as a QCL-type F reference signal. In addition, the TCI state further includes information such as a TCI state ID, and a cell ID and a BWP ID of the reference signal.

A QCL type E is a QCL type newly defined for the method in this embodiment, and has the functions described in 104. In addition, the QCL type E is further used to indicate that a transmit beam of the SRS and the transmit beam of the PUSCH have consistency about a spatial domain parameter. In other words, the QCL type E indicates that the terminal may perform PUSCH transmission by using the transmit beam of the SRS.

Optionally, the QCL type E may be further used to indicate that a transmit beam and a receive beam have consistency about a spatial domain parameter. In other words, the QCL type E indicates that the terminal may perform uplink transmission by using a transmit beam corresponding to a receive beam of a downlink signal such as an SSB or a CSI-RS.

Optionally, another QCL type may be newly defined to distinguish between these different functions. Examples are as follows:

- QCL type E: A transmit beam of a reference signal and a receive beam of a target signal have consistency about a spatial domain parameter.
- QCL type F: A transmit beam of a reference signal and a transmit beam of a target signal have consistency about a spatial domain parameter.
- QCL type G: A receive beam of a reference signal and a transmit beam of a target signal have consistency about a spatial domain parameter.

Optionally, the transmit beam herein may be used for, but is not limited to, PUSCH transmission, PUCCH transmission, and SRS transmission.

Optionally, in this embodiment, the terminal sends the different SRS resources through the two antenna panels. Therefore, the QCL-type E reference signal may also include two SRS resource identifiers.

```
TCI-State ::=                    SEQUENCE {

tci-StateId                          TCI-StateId,

    qcl-Type1                        QCL-Info,

    qcl-Type2                        QCL-Info

            ...

    }

QCL-Info ::=                     SEQUENCE {

        cell                             ServCellIndex

        bwp-Id                           BWP-Id

        referenceSignal                  CHOICE {

        SRS1                             SRS-ResourceId,

            SRS2                             SRS-ResourceId, optional

            },

        qcl-Type                         QCL TypeE,
```

...

}

When the TCI state is used for PUCCH transmission, in addition to configuring a plurality of TCI states in RRC, the base station may further use MAC CE signaling to notify the terminal of a TCI state ID corresponding to a TCI state that needs to be used.

When the TCI state is used for PUSCH receiving, in addition to configuring a plurality of TCI states in RRC, the base station may further use a TCI field in DCI to notify the terminal of a TCI state ID corresponding to a TCI state that needs to be used. Optionally, the base station may notify, by reusing an SRI field in the DCI, the terminal of the TCI state ID corresponding to the TCI state that needs to be used.

When the TCI state is used for the SRS, in addition to configuring a plurality of TCI states in RRC, the base station may further specifically configure a transmit beam parameter, for example, a spatial relation parameter, of each SRS resource in RRC, to notify the terminal of an SRS resource and a TCI state ID corresponding to a TCI state that needs to be used to send the SRS resource.

The terminal may send, to the base station based on beam information notified by the base station, uplink information such as a PUSCH, a PUCCH, and an SRS.

This method requires that a new field be added to a DCI format for scheduling the PUSCH.

Considering power consumption of the terminal, the TCI state may include only one SRS resource identifier. During uplink transmission, the terminal performs PUSCH transmission by using a transmit beam corresponding to the resource identifier. During downlink transmission, the terminal forms, according to the method in 103, two analog beams through two receive antenna panels, to perform PDSCH receiving.

105 to 107 are optional operations without a strict sequence, and may be separately combined with FIG. 5.

Optionally, if the DCI format in the current technology is still retained, the SRI in the DCI may point to an SRS resource in an SRS resource set whose usage is configured as 'BM + AS'.

In the foregoing embodiment, the usage of the SRS resource sets is configured as antenna switch + beam management. The terminal may perform antenna panel switching between the different SRS resource sets, and SRS resources in one SRS resource set are used to select a transmit beam of one antenna panel. In this way, the terminal implements both of functions: beam selection and antenna switch, so that the downlink channel measured by the base station is no longer limited to a range of an analog beam direction. This helps improve a downlink transmission rate.

Optionally, in another embodiment, this may also be implemented by configuring one SRS resource set. Usage of the SRS resource set is configured as antenna switch + beam management. The SRS resource set includes eight SRS resources. The terminal may perform antenna panel switching between the first four SRS resources and the last four SRS resources in the SRS resource set, and the first four SRS resources and the last four SRS resources are used to select a transmit beam of one antenna panel. An operation thereof is similar to that in the foregoing embodiment. Details are not described again.

Optionally, in another embodiment, usage of an SRS resource set is alternatively configured as antenna switch + noncodebook. For example, an SRS resource set is configured for the terminal based on the capability information fed back by the terminal. For example, if the capability of the terminal is 2T4R, the base station may configure two SRS resource sets for the terminal. Each SRS resource set includes a plurality of SRS resources, for example, four SRS resources. A quantity of resources may be determined based on a quantity required by the terminal. Because the terminal supports 2T, each SRS resource is a two-port resource, and may be sent through two antenna ports. The terminal may perform antenna panel switching between the different SRS resource sets, and SRS resources in one SRS resource set are used for transmission codebook probing of one antenna panel. In other words, the terminal may send SRSs on the different SRS resources by using different transmission codebooks. In this way, the base station can select an appropriate transmission codebook for each antenna panel of the terminal.

Optionally, in another embodiment, usage of an SRS resource set is alternatively configured as antenna switch + codebook. For example, an SRS resource set is configured for the terminal based on the capability information fed back by the terminal. For example, if the capability of the terminal is 2T4R, the base station may configure two SRS resource sets for the terminal. Each SRS resource set includes one SRS resource. Because the terminal supports 2T, each SRS resource is a two-port resource, and may be sent through two antenna ports. The terminal may perform antenna panel switching between the different SRS resource sets, and an SRS resource in one SRS resource set is used by the terminal to send an SRS. In this way, the base station can calculate an appropriate transmission codebook for each antenna panel of the terminal.

Optionally, in another embodiment, usage of an SRS resource set is alternatively configured as beam management + noncodebook. For example, an SRS resource set is configured for the terminal based on the capability information fed back by the terminal. For example, if the capability of the terminal is four transmit beams, the base station may configure four SRS resource sets for the terminal. Each SRS resource set includes four SRS resources. The terminal may perform transmit beam switching between the different SRS resource sets, and SRS resources in one SRS resource set are used for transmission codebook probing of one transmit beam. In this way, the base station can select an appropriate transmission codebook for each transmit beam of the terminal.

Optionally, in another embodiment, usage of an SRS resource set is alternatively configured as beam management + codebook. For example, an SRS resource set is configured for the terminal based on the capability information fed back by the terminal. For example, if the capability of the terminal is four transmit beams and one transmit antenna panel, the base station may configure four SRS resource sets for the terminal. Each SRS resource set includes one SRS resource. The terminal may perform transmit beam switching between the different SRS resource sets, and an SRS resource in one SRS resource set is used by the terminal to send an SRS. In this way, the base station can calculate an appropriate transmission codebook for each transmit beam of the terminal. For example, if the capability of the terminal is four transmit beams and two transmit antenna panels, the base station may configure four SRS resource sets for the terminal. Each SRS resource set includes two SRS resources. The terminal may perform transmit beam switching between the different SRS resource sets, and SRS resources in one SRS resource set are used by the terminal to send an SRS through the different transmit antenna panels. In this way, the base station can calculate an appropriate transmission codebook for each transmit beam of each transmit antenna panel of the terminal.

**Embodiment 2**

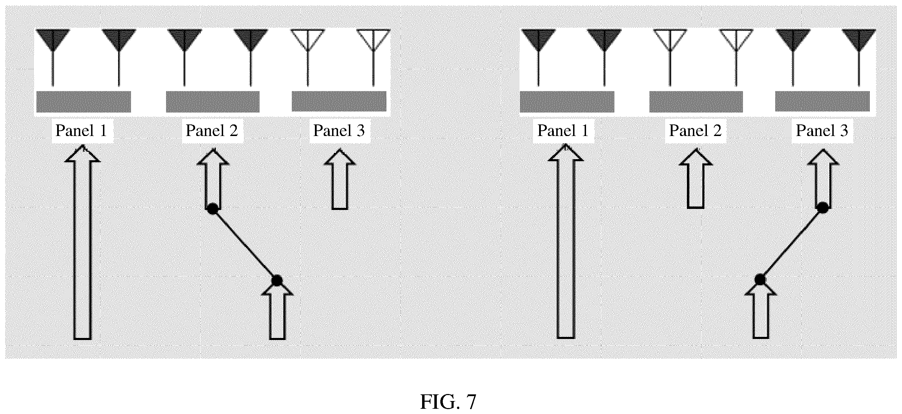

Different from Embodiment 1, in Embodiment 2, in addition to that a quantity of antennas that can be simultaneously used by the terminal during sending is less than a quantity of antennas that can be simultaneously used by the terminal during receiving, a plurality of receive antennas of the terminal cannot be all used at the same time. Therefore, a problem of selecting a receive antenna is further involved. As shown in FIG. 6 and FIG. 7, the terminal includes three panels, and each panel includes two antennas. A panel 1 (and two antennas corresponding to the panel 1) exclusively occupies one radio frequency chain RF chain or one group of radio frequency chains, and a panel 2 and a panel 3 share one radio frequency chain or one group of radio frequency chains. Therefore, the panel 2 and the panel 3 cannot form 4R, and can only be separately combined with the panel 1 to form 4R.

200: Report a capability of the terminal.

Based on 100 in Embodiment 1, newly added capabilities of the terminal in this embodiment are as follows:

a quantity of transmit/receive antenna panels of the terminal, where for example, according to FIG. 6, the quantity of transmit antenna panels is 3, and the quantity of receive antenna panels is 3; and

a quantity of transmit/receive antenna panels that can be simultaneously used by the terminal, where for example, according to FIG. 7, the quantity of transmit antenna panels that can be simultaneously used by the terminal is 1, and the quantity of receive antenna panels that can be simultaneously used by the terminal is 2 (a panel 1 + a panel 2 or a panel 1 + a panel 3).

201: A base station sends configuration information to the terminal.

This is similar to Embodiment 1. However, the base station may configure three SRS resource sets based on the capability information fed back by the terminal in 200. Each SRS resource set has four SRS resources, and each SRS resource is a two-port resource. Usage (usage) of the three SRS resource sets is configured as 'beam management BM + antenna switch AS'. The terminal performs antenna switching between the different SRS resource sets, and SRS resources in a same SRS resource set are used for beam management of one antenna panel.

Information about receive antenna panels that can be simultaneously used to form 4R is established between the base station and the terminal in various possible manners. Examples are as follows:

1. Rule defined in a protocol: In 200, the terminal has fed back that the terminal has the three receive antenna panels, but only two panels can be simultaneously used during downlink reception. In addition, the base station configures, based on the capability, the three SRS resource sets for usage: BM + AS. Therefore, it may be predefined in the protocol that antenna panels can be simultaneously used are determined based on SRS resource set identifiers (SRS resource set ID, set ID for short). Value of the IDs may be used. For example, it is predefined in the protocol that two SRS resource sets having smaller set IDs (where for example, set ID = 1, 2) are sent through two receive antenna panels that cannot be simultaneously used by the terminal. In other words, if set ID = 1, 2, 3, because the antenna panel 2 and the panel 3 cannot be simultaneously used, the terminal respectively sends, through the antenna panel 2 and the panel 3, SRS resources in the two SRS resource sets whose set IDs are 1 and 2.

2. Method in which the base station performs configuration: For example, the base station configures usage of SRS resource sets whose set IDs are 1 and 2 as 'beam management BM + antenna switch AS', and additionally indicates a requirement that simultaneous reception can (or cannot) be performed. The terminal needs to send, through the panels 1 and 2 or the panels 1 and 3, SRS resources in the two SRS resource sets whose set IDs are 1 and 2.

3. Method in which the terminal performs feedback: The terminal notifies, by using an explicit message, the base station of SRS resource sets of which receive antenna panels corresponding to transmit antenna panels can be simultaneously used for receiving. For example, the panels 1 and 2 or the panels 1 and 3 can be simultaneously used for receiving.

Other operations in Embodiment 2 are similar to those in Embodiment 1. Each operation process in Embodiment 1 is then performed. Details are not described again.

It may be understood that, in the foregoing method embodiments, the methods and the operations implemented by the terminal may alternatively be implemented by a component (for example, a chip or a circuit) used in the terminal, and the methods and the operations implemented by the network device may alternatively be implemented by a component (for example, a chip or a circuit) used in the network device.

The foregoing mainly describes the solutions provided in embodiments of this application from a perspective of interaction. It may be understood that, to implement the foregoing functions, each network element, for example, a transmit end device or a receive end device, includes a corresponding hardware structure and/or software module for implementing each function. A person skilled in the art may be aware that, with reference to the examples described in embodiments disclosed in this specification, units and algorithm steps can be implemented by hardware or a combination of hardware and computer software in this application. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of this application.

In embodiments of this application, division into functional modules may be performed on the transmit end device or the receive end device based on the foregoing method examples. For example, various functional modules may be divided based on corresponding functions, or two or more functions may be integrated into one processing module. The integrated module may be implemented in a form of hardware, or may be implemented in a form of a software functional module. It should be noted that, in embodiments of this application, division into the modules is an example, and is merely logical function division. During actual implementation, another division manner may be used. An example in which various functional modules are divided based on corresponding functions is used below for description.

It should be understood that specific examples in embodiments of this application are merely intended to help a person skilled in the art better understand embodiments of this application, but are not intended to limit the scope of embodiments of this application.

It should be understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

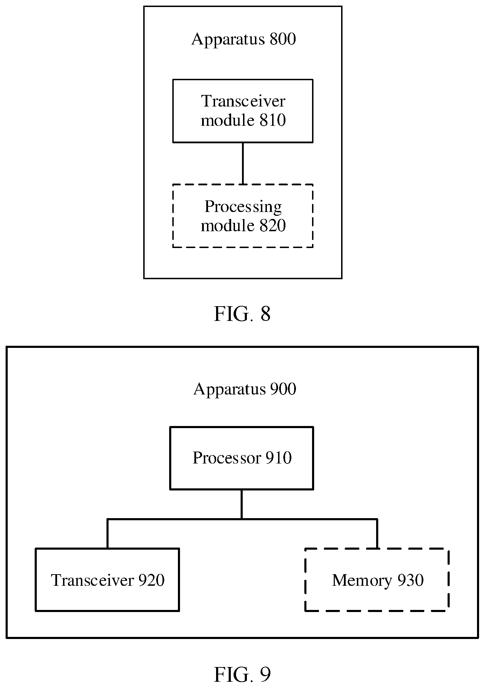

The methods provided in embodiments of this application are described in detail above with reference to FIG. 3 to FIG. 7. Apparatuses provided in embodiments of this application are described in detail below with reference to FIG. 8 to FIG. 13. It should be understood that descriptions of apparatus embodiments correspond to the descriptions of the method embodiments. Therefore, for content that is not described in detail, refer to the foregoing method embodiments. For brevity, details are not described herein again.

FIG. 8 is a schematic block diagram of a communication apparatus 800 according to an embodiment of this application.

It should be understood that the apparatus 800 may correspond to the terminal or the chip in the terminal in the embodiments shown in FIG. 4 and FIG. 5, and may have any function of the terminal in the method embodiments shown in FIG. 4 and FIG. 5. The apparatus 800 includes a transceiver module 810. The transceiver module 810 may specifically include a receiving module and a sending module.

The receiving module is configured to: receive configuration information (in 101 in FIG. 5), receive an appropriate downlink beam notified by a network device (in 104), and the like.

The sending module is configured to send a capability of the terminal, an SRS (in 100 and 102 in FIG. 5), and the like.

In an embodiment, the communication apparatus includes:

a receiving module, configured to receive configuration information sent by a network device, where the configuration information includes at least a first SRS resource set and a second SRS resource set, and usage of each SRS resource set is beam management + antenna switch; and
a sending module, configured to: send each SRS resource in the first SRS resource set by using a first antenna group, and send each SRS resource in the second SRS resource set by using a second antenna group.

Optionally, SRS resources in a same SRS resource set are sent by using different beams.

Optionally, SRS resources whose identifiers are in a same order in the first SRS resource set and the second SRS resource set are sent by using beams in a same direction.

Optionally, the first SRS resource set and the second SRS resource set have at least one same parameter: a path loss estimation reference signal, time domain behavior, and a transmit power-related parameter.

Optionally, a transmission time interval between the first SRS resource set and the second SRS resource set is greater than or equal to antenna group activation and/or switching time of the terminal.

Optionally, a transmission time interval between the first SRS resource set and the second SRS resource set is less than or equal to channel coherence time.

Optionally, the method further includes: receiving indication information delivered by the network device, where the indication information includes at least one of information about a beam used by the first antenna group for downlink transmission and information about a beam used by the second antenna group for downlink transmission.

Optionally, the beam used for downlink transmission is a beam corresponding to an SRS having highest signal quality.

Optionally, a combination of the SRS resources in the two SRS resource sets has a preset binding relationship.

Optionally, the information about the beam used for downlink transmission is carried in qcl-info of CSI-RS configuration information, or is carried in DCI.

Further, the apparatus 800 may further include a processing module 820. The processing module 820 is configured to perform an operation other than a sending operation and a receiving operation in the method embodiments.

For more detailed descriptions of the transceiver module 810 and the processing module 220, refer to related descriptions in the foregoing method embodiments. Details are not described herein again.

FIG. 9 shows a communication apparatus 900 according to an embodiment of this application. The apparatus 900 may be the terminal described in FIG. 5. The apparatus may use a hardware architecture shown in FIG. 9. The apparatus may include a processor 910 and a transceiver 930. Optionally, the apparatus may further include a memory 940. The processor 910, the transceiver 930, and the memory 940 communicate with each other through an internal connection path. A related function implemented by the processing module 820 in FIG. 8 may be implemented by the processor 910, and a related function implemented by the transceiver module 810 may be implemented by the processor 910 by controlling the transceiver 930.

Optionally, the processor 910 may be a general-purpose central processing unit (central processing unit, CPU), a microprocessor, an application-specific integrated circuit (application-specific integrated circuit, ASIC), a dedicated processor, or one or more integrated circuits configured to perform the technical solutions in embodiments of this application. Alternatively, the processor may be one or more devices, circuits, and/or processing cores configured to process data (for example, computer program instructions). For example, the processor may be a baseband processor or a central processing unit. The baseband processor may be configured to process a communication protocol and communication data. The central processing unit may be configured to: control a communication apparatus (for example, a base station, a terminal, or a chip), execute a software program, and process data of the software program.

Optionally, the processor 910 may include one or more processors, for example, include one or more central processing units (central processing unit, CPU). When the processor is one CPU, the CPU may be a single-core CPU, or may be a multi-core CPU.

The transceiver 930 is configured to: send and receive data and/or a signal, and receive data and/or a signal. The transceiver may include a transmitter and a receiver. The transmitter is configured to send data and/or a signal, and the receiver is configured to receive data and/or a signal.

The memory 940 includes but is not limited to a random access memory (random access memory, RAM), a read-only memory (read-only memory, ROM), an erasable programmable read-only memory (erasable programmable read-only memory, EPROM), and a compact disc read-only memory (compact disc read-only memory, CD-ROM). The memory 940 is configured to store related instructions and data.

The memory 940 is configured to store program code and data of the terminal, and may be an independent component or integrated into the processor 910.

Specifically, the processor 910 is configured to control the transceiver to perform information transmission with the terminal. For details, refer to the descriptions in the foregoing method embodiments. Details are not described herein again.

During specific implementation, in an embodiment, the apparatus 900 may further include an output device and an input device. The output device communicates with the processor 910, and may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector (projector). The input device communicates with the processor 910, and may receive an input from a user in a plurality of manners. For example, the input device may be a mouse, a keyboard, a touchscreen device, or a sensor device.

It may be understood that FIG. 9 merely shows a simplified design of the communication apparatus. During actual application, the apparatus may further include other necessary components, including but not limited to any quantity of transceivers, processors, controllers, memories, and the like, and all terminals that can implement this application fall within the protection scope of this application.

In a possible design, the apparatus 900 may be a chip, for example, a communication chip that can be used in the terminal, and is configured to implement a related function of the processor 910 in the terminal. The chip may be a field programmable gate array, a dedicated integrated chip, a system chip, a central processing unit, a network processor, a digital signal processing circuit, or a microcontroller that implements the related function, or may be a programmable controller or another integrated chip. Optionally, the chip may include one or more memories, configured to store program code. When the code is executed, the processor is enabled to implement a corresponding function.

An embodiment of this application further provides an apparatus. The apparatus may be a terminal or a circuit. The apparatus may be configured to perform an action performed by the terminal in the foregoing method embodiments.

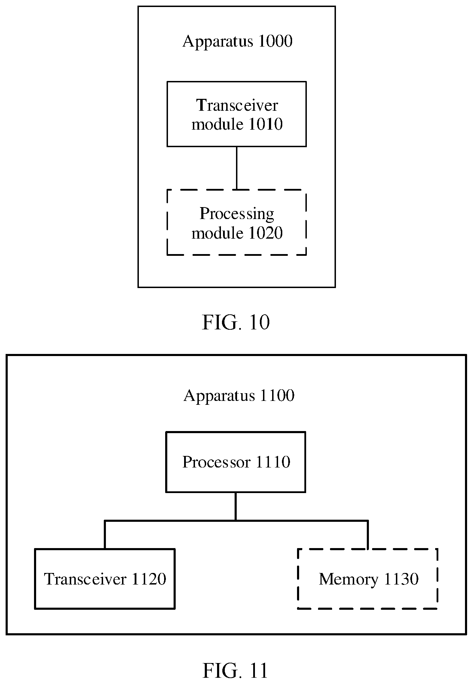

FIG. 10 is a schematic block diagram of a communication apparatus 1000 according to an embodiment of this application.

It should be understood that the communication apparatus 1000 may correspond to the network device or the chip in the network device in the embodiment shown in FIG. 5, and may have any function of the network device in the method. The apparatus 1000 includes a transceiver module 1010. The transceiver module includes a receiving module and a sending module.

The sending module is configured to: send configuration information (in 101 in FIG. 5), notify a terminal of an appropriate downlink beam (in 104), and the like.

The receiving module is configured to receive a capability, an SRS (in 100 and 102 in FIG. 5), and the like that are sent by the terminal.

Optionally, the apparatus 1000 may further include a determining module 1020. The determining module may be configured to perform an operation other than a sending operation and a receiving operation, for example, SRS measurement (in 103 in FIG. 5).

In an embodiment, the communication apparatus includes:

a sending module, configured to send configuration information to a terminal, where the configuration information includes at least a first sounding reference signal SRS resource set and a second SRS resource set, and usage of each SRS resource set is beam management + antenna switch; and

a processing module, configured to: measure each SRS resource, in the first SRS resource set, sent by the terminal by using a first antenna group, and measure each SRS resource, in the second SRS resource set, sent by the terminal by using a second antenna group; and

determine, based on a measurement result, an SRS resource that meets a quality requirement in the first SRS resource set and an SRS resource that meets a quality requirement in the second SRS resource set.

Further, the sending module is further configured to notify the terminal of at least one of a beam corresponding to the SRS resource that meets the quality requirement in the first SRS resource set and a beam corresponding to the SRS resource that meets the quality requirement in the second SRS resource set.

Optionally, the beam corresponding to the SRS resource that meets the quality requirement is a beam corresponding to an SRS having highest signal quality.

Optionally, a combination of the SRS resources in the two SRS resource sets has a preset binding relationship.

Optionally, information about the beam corresponding to the SRS resource that meets the quality requirement is carried in qcl-info of channel state information reference signal CSI-RS configuration information, or is carried in downlink control information DCI.

The beam corresponding to the SRS resource may be indicated by using an SRS identifier, and the SRS identifier is used to indicate a beam that can be used by the terminal for downlink transmission.

For more detailed descriptions of the transceiver module 1010 and the processing module 1020, refer to related descriptions in the foregoing method embodiments. Details are not described herein again.

FIG. 11 shows a communication apparatus 1100 according to an embodiment of this application. The apparatus 1100 may be the network device in FIG. 5. The apparatus may use a hardware architecture shown in FIG. 11. The apparatus may include a processor 1110 and a transceiver 1120. Optionally, the apparatus may further include a memory 1130. The processor 1110, the transceiver 1120, and the memory 1130 communicate with each other through an internal connection path. A related function implemented by the processing module 1020 in FIG. 10 may be implemented by the processor 1110, and a related function implemented by the transceiver module 1010 may be implemented by the processor 1110 by controlling the transceiver 1120.

Optionally, the processor 1110 may be a general-purpose central processing unit (central processing unit, CPU), a microprocessor, an application-specific integrated circuit (application-specific integrated circuit, ASIC), a dedicated processor, or one or more integrated circuits configured to perform the technical solutions in embodiments of this application. Alternatively, the processor may be one or more devices, circuits, and/or processing cores configured to process data (for example, computer program instructions). For example, the processor may be a baseband processor or a central processing unit. The baseband processor may be configured to process a communication protocol and communication data. The central processing unit may be configured to: control a communication apparatus (for example, a base station, a terminal, or a chip), execute a software program, and process data of the software program.

Optionally, the processor 1110 may include one or more processors, for example, include one or more central processing units (central processing unit, CPU). When the processor is one CPU, the CPU may be a single-core CPU, or may be a multi-core CPU.

The transceiver 1120 is configured to: send and receive data and/or a signal, and receive data and/or a signal. The transceiver may include a transmitter and a receiver. The transmitter is configured to send data and/or a signal, and the receiver is configured to receive data and/or a signal.

The memory 1130 includes but is not limited to a random access memory (random access memory, RAM), a read-only memory (read-only memory, ROM), an erasable programmable read-only memory (erasable programmable read-only memory, EPROM), and a compact disc read-only memory (compact disc read-only memory, CD-ROM). The memory 1130 is configured to store related instructions and data.

The memory 1130 is configured to store program code and data of the network device, and may be an independent component or integrated into the processor 1110.

Specifically, the processor 1110 is configured to control the transceiver to perform information transmission with the terminal. For details, refer to the descriptions in the foregoing method embodiments. Details are not described herein again.

During specific implementation, in an embodiment, the apparatus 1100 may further include an output device and an input device. The output device communicates with the processor 1110, and may display information in a plurality of manners. For example, the output device may be a liquid crystal display (liquid crystal display, LCD), a light emitting diode (light emitting diode, LED) display device, a cathode ray tube (cathode ray tube, CRT) display device, or a projector (projector). The input device communicates with the processor 1110, and may receive an input from a user in a plurality of manners. For example, the input device may be a mouse, a keyboard, a touchscreen device, or a sensor device.

It may be understood that FIG. 11 merely shows a simplified design of the communication apparatus. During actual application, the apparatus may further include other necessary components, including but not limited to any quantity of transceivers, processors, controllers, memories, and the like, and all network devices that can implement this application fall within the protection scope of this application.

In a possible design, the apparatus 1100 may be a chip, for example, a communication chip that can be used in the network device and that is configured to implement a related function of the processor 1110 in the network device. The chip may be a field programmable gate array, a dedicated integrated chip, a system chip, a central processing unit, a network processor, a digital signal processing circuit, or a microcontroller that implements the related function, or may be a programmable controller or another integrated chip. Optionally, the chip may include one or more memories, configured to store program code. When the code is executed, the processor is enabled to implement a corresponding function.

An embodiment of this application further provides an apparatus. The apparatus may be a network device or a circuit. The apparatus may be configured to perform an action performed by the network device in the foregoing method embodiments.

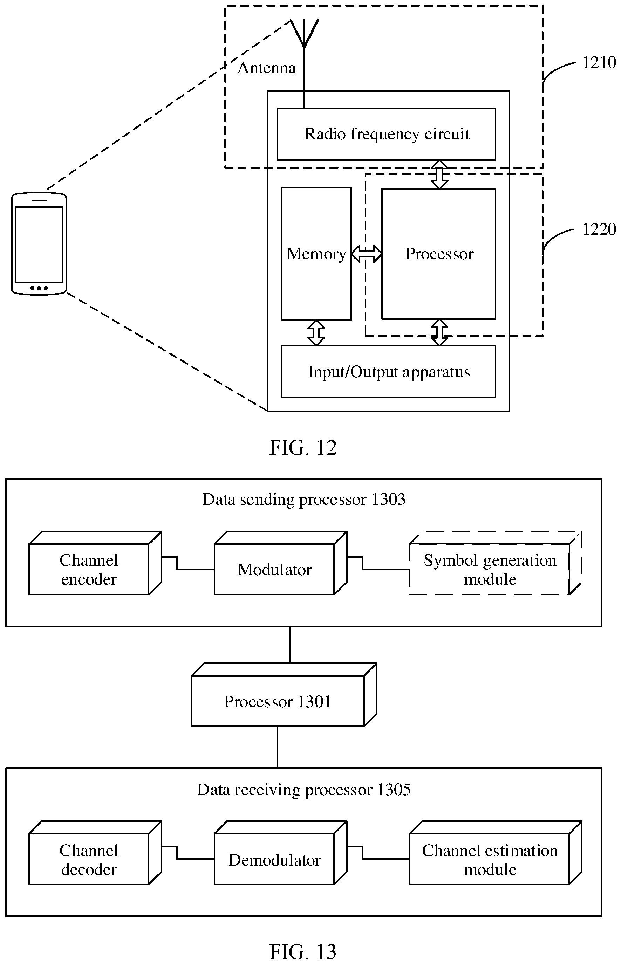

Optionally, when the apparatus in this embodiment is a terminal, FIG. 12 is a schematic diagram of a simplified structure of a terminal. For ease of understanding and illustration, in FIG. 12, a mobile phone is used as an example of the terminal. As shown in FIG. 12, the terminal includes a processor, a memory, a radio frequency circuit, an antenna, and an input/output apparatus. The processor is mainly configured to: process a communication protocol and communication data, control the terminal, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to send and receive a radio frequency signal in a form of an electromagnetic wave. The input/output apparatus, for example, a touchscreen, a display, or a keyboard, is mainly configured to: receive data entered by a user and output data to the user. It needs to be noted that some types of terminals may not have the input/output apparatus.

When data needs to be sent, the processor performs baseband processing on the to-be-sent data, and outputs a baseband signal to the radio frequency circuit. The radio frequency circuit performs radio frequency processing on the baseband signal, and sends a radio frequency signal through the antenna in a form of an electromagnetic wave. When data is sent to the terminal, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 12 shows only one memory and one processor. An actual terminal product may include one or more processors and one or more memories. The memory may also be referred to as a storage medium, a storage device, or the like. The memory may be disposed independently of the processor, or may be integrated with the processor. This is not limited in this embodiment of this application.

In this embodiment of this application, the antenna having receiving and sending functions and the radio frequency circuit may be considered as a transceiver unit of the terminal, and the processor having a processing function is considered as a processing unit of the terminal. As shown in FIG. 12, the terminal includes a transceiver unit 1210 and a processing unit 1220. The transceiver unit may also be referred to as a transceiver, a transceiver apparatus, or the like. The processing unit may also be referred to as a processor, a processing board, a processing module, a processing apparatus, or the like. Optionally, a component that is in the transceiver unit 1210 and that is configured to implement a receiving function may be considered as a receiving unit, and a component that is in the transceiver unit 1210 and that is configured to implement a sending function may be considered as a sending unit. In other words, the transceiver unit 1210 includes the receiving unit and the sending unit. The transceiver unit sometimes may also be referred to as a transceiver, a transceiver circuit, or the like. The receiving unit sometimes may also be referred to as a receiver, a receiving circuit, or the like. The sending unit sometimes may also be referred to as a transmitter, a transmitting circuit, or the like.

It should be understood that the transceiver unit 1210 is configured to perform a sending operation and a receiving operation on a terminal side in the foregoing method embodiments, and the processing unit 1220 is configured to perform an operation other than the receiving/sending operation of the terminal in the foregoing method embodiments.

For example, in an implementation, the processing unit 1220 is configured to perform a processing operation on the terminal side in FIG. 5. The transceiver unit 1210 is configured to perform the receiving/sending operation in FIG. 5, and/or the transceiver unit 1210 is further configured to perform another receiving/sending operation on the terminal side in embodiments of this application.

When the apparatus is a chip, the chip includes a transceiver unit and a processing unit. The transceiver unit may be an input/output circuit or a communication interface. The processing unit is a processor, a microprocessor, or an integrated circuit integrated on the chip.

Optionally, when the apparatus is a terminal, reference may further be made to a device shown in FIG. 13. In an example, the device may implement a function similar to that of the processor 910 in FIG. 9. In FIG. 13, the device includes a processor 1301, a data sending processor 1303, and a data receiving processor 1305. The processing module 820 in the foregoing embodiment shown in FIG. 8 may be the processor 1301 in FIG. 13, and completes a corresponding function. The transceiver module 810 in the foregoing embodiment shown in FIG. 8 may be the data sending processor 1303 and the data receiving processor 1305 in FIG. 13. Although FIG. 13 shows a channel encoder and a channel decoder, it may be understood that these modules are merely examples, and do not constitute a limitation on this embodiment.

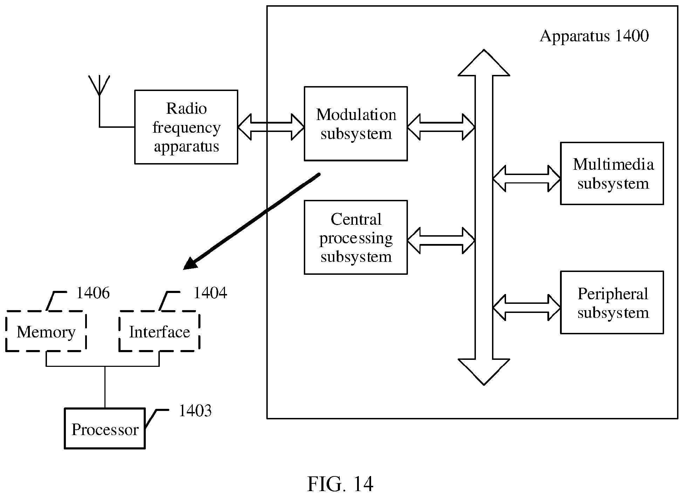

FIG. 14 shows another form of this embodiment. A processing apparatus 1400 includes modules such as a modulation subsystem, a central processing subsystem, and a peripheral subsystem. A communication device in this embodiment may be used as the modulation subsystem in the processing apparatus 1400. Specifically, the modulation subsystem may include a processor 1403 and an interface 1404. The processor 1403 implements a function of the processing module 820, and the interface 1404 implements a function of the transceiver module 810. In another variation, the modulation subsystem includes a memory 1406, the processor 1403, and a program that is stored in the memory and that can be run on the processor. When the program is executed by the processor, the methods in embodiments are implemented. It should be noted that the memory 1406 may be nonvolatile or volatile. The memory 1406 may be located inside the modulation subsystem, or may be located in the processing apparatus 1400, provided that the memory 1406 can be connected to the processor 1403.

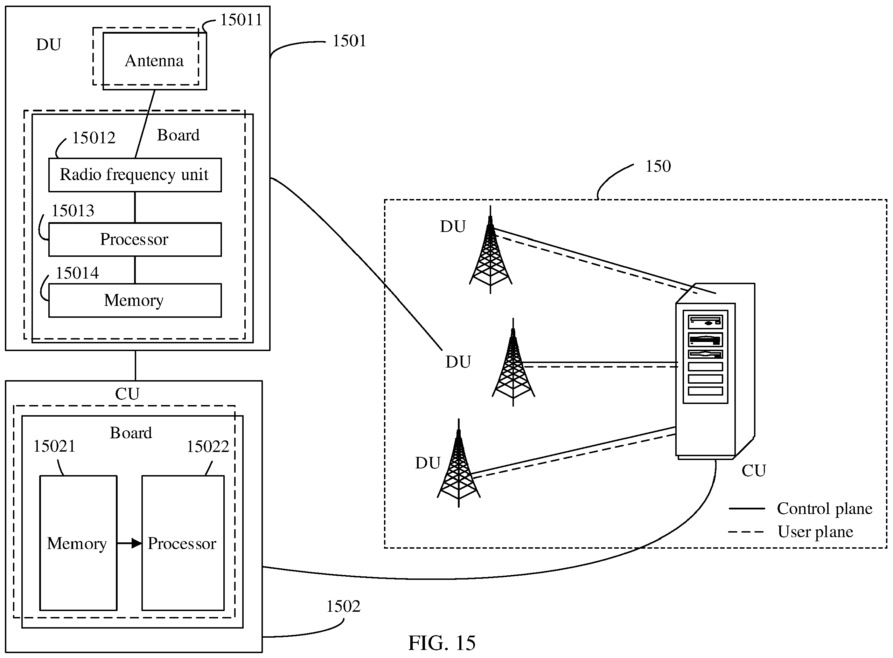

When the apparatus in this embodiment is a network device, the network device may be shown in FIG. 15. For example, an apparatus 150 is a base station. The base station may be used in the system shown in FIG. 1, to perform a function of the network device in the foregoing method embodiments. The base station 150 may include one or more DUs 1501 and one or more CUs 1502. The CU 1502 may communicate with a next-generation core network (NG core, NC). The DU 1501 may include at least one antenna 15011, at least one radio frequency unit 15015, at least one processor 15013, and at least one memory 15014. The DU 1501 is mainly configured to: send and receive a radio frequency signal, perform conversion between the radio frequency signal and a baseband signal, and perform partial baseband processing. The CU 1502 may include at least one processor 15022 and at least one memory 15021. The CU 1502 and the DU 1501 may communicate with each other through an interface. A control plane (control plane) interface may be Fs-C, for example, F1-C, and a user plane (user plane) interface may be Fs-U, for example, F1-U.

The CU 1502 is mainly configured to: perform baseband processing, control the base station, and the like. The DU 1501 and the CU 1502 may be physically disposed together, or may be physically separated, that is, in a distributed base station. The CU 1502 is a control center of the base station, may also be referred to as a processing unit, and is mainly configured to complete a baseband processing function. For example, the CU 1502 may be configured to control the base station to perform an operation procedure related to the network device in the foregoing method embodiments.

Specifically, baseband processing on the CU and the DU may be divided based on protocol layers of a wireless network. For example, functions of a packet data convergence protocol (packet data convergence protocol, PDCP) layer and a protocol layer above the PDCP layer are set in the CU. Functions of protocol layers below the PDCP layer, such as a radio link control (radio link control, RLC) layer and a medium access control (medium access control, MAC) layer, are set in the DU. For another example, the CU implements functions of a radio resource control (radio resource control, RRC) layer and a packet data convergence protocol (packet data convergence protocol, PDCP) layer. The DU implements functions of a radio link control (radio link control, RLC) layer, a MAC layer, and a physical (physical, PHY) layer.

In addition, optionally, the base station 150 may include one or more radio frequency units (RU), one or more DUs, and one or more CUs. The DU may include at least one processor 15013 and at least one memory 15014, the RU may include at least one antenna 15011 and at least one radio frequency unit 15015, and the CU may include at least one processor 15022 and at least one memory 15021.

For example, in an implementation, the processor 15013 is configured to perform processing steps on a network device side in FIG. 5. The radio frequency unit 15015 is configured to perform the receiving/sending operation in FIG. 5.

In an example, the CU 1502 may include one or more boards, and a plurality of boards may jointly support a radio access network (for example, a 5G network) of a single access standard, or may separately support radio access networks (such as an LTE network, a 5G network, or another network) of different access standards. The memory 15021 and the processor 15022 may serve one or more boards. In other words, a memory and a processor may be separately disposed on each board. Alternatively, a plurality of boards may share a same memory and a same processor. In addition, a necessary circuit may be further disposed on each board. The DU 1501 may include one or more boards, and a plurality of boards may jointly support a radio access network (for example, a 5G network) of a single access standard, or may separately support radio access networks (such as an LTE network, a 5G network, or another network) of different access standards. The memory 15014 and the processor 15013 may serve one or more boards. In other words, a memory and a processor may be separately disposed on each board. Alternatively, a plurality of boards may share a same memory and a same processor. In addition, a necessary circuit may be further disposed on each board.

All or a part of the foregoing embodiments may be implemented by software, hardware, firmware, or any combination thereof. When software is used for implementation, all or a part of embodiments may be implemented in a form of a computer program product. The computer program product includes one or more computer instructions. When the computer instructions are loaded and executed on a computer, all or a part of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state disk, SSD)), or the like.

It should be understood that, the processor may be an integrated circuit chip, and has a signal processing capability. In an implementation process, the steps in the foregoing method embodiments may be completed by using a hardware integrated logic circuit in the processor or instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the methods, the steps, and the logical block diagrams that are disclosed in embodiments of this application. The general-purpose processor may be a microprocessor, or the processor may be any conventional processor or the like. The steps of the methods disclosed with reference to embodiments of this application may be performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps in the foregoing method in combination with the hardware of the processor.

It may be understood that, in embodiments of this application, the memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchronous link DRAM, SLDRAM), and a direct rambus dynamic random access memory (direct rambus RAM, DR RAM).

In this application, "at least one" means one or more, and "a plurality of" means two or more. The term "and/or" describes an association relationship between associated objects and represents that three relationships may exist. For example, A and/or B may represent the following cases: Only A exists, both A and B exist, and only B exists, where A and B may be singular or plural. The character "/" usually represents an "or" relationship between the associated objects. "At least one of the following items (pieces)" or a similar expression thereof means any combination of these items, including a single item (piece) or any combination of a plurality of items (pieces). For example, at least one (piece) of a, b, or c may indicate a, b, c, a and b, a and c, b and c, or a, b, and c, where a, b, and c each may be singular or plural.

It should be understood that "one embodiment" or "an embodiment" mentioned in the entire specification means that particular features, structures, or characteristics related to the embodiment are included in at least one embodiment of this application. Therefore, "in one embodiment" or "in an embodiment" that appears throughout the entire specification does not necessarily mean a same embodiment. In addition, these particular features, structures, or characteristics may be combined in one or more embodiments in any appropriate manner. It should be understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

Terms such as "component", "module", and "system" used in this specification are used to indicate computer-related entities, hardware, firmware, combinations of hardware and software, software, or software being executed. For example, a component may be but is not limited to a process that runs on a processor, a processor, an object, an executable file, a thread of execution, a program, and/or a computer. As shown in figures, both a computing device and an application that runs on a computing device may be components. One or more components may reside within a process and/or a thread of execution, and a component may be located on one computer and/or distributed between two or more computers. In addition, these components may be executed by various computer-readable media that store various data structures. For example, the components may communicate by using a local and/or remote process and based on a signal having one or more data packets (for example, data from two components interacting with another component in a local system, a distributed system, and/or across a network such as the internet interacting with another system by using the signal).

It should further be understood that "first", "second", and various numerical symbols in this specification are merely used for distinguishing for ease of description, and are not intended to limit the scope of embodiments of this application.

It should be understood that the term "and/or" in this specification describes only an association relationship between associated objects and represents that three relationships may exist. For example, A and/or B may represent the following three cases: Only A exists, both A and B exist, and only B exists. When only A or only B exists, a quantity of A or B is not limited. In an example in which only A exists, it may be understood as that there is one or more A.

A person of ordinary skill in the art may be aware that, with reference to the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in another manner. For example, the described apparatus embodiments are merely examples. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate. Parts displayed as units may or may not be physical units, to be specific, may be located in one position, or may be distributed on a plurality of network units. A part or all of the units may be selected based on an actual requirement to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, or a network device) to perform all or some of the steps in the method described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A resource configuration method, comprising:

   receiving configuration information sent by a network device, wherein the configuration information comprises at least a first sounding reference signal SRS resource set and a second SRS resource set, and usage of each SRS resource set is beam management + antenna switch; and

   sending each SRS resource in the first SRS resource set by using a first antenna group, and sending each SRS resource in the second SRS resource set by using a second antenna group.

2. The method according to claim 1, wherein SRS resources in a same SRS resource set are sent by using different beams.

3. The method according to claim 1, wherein SRS resources whose identifiers are in a same order in the first SRS resource set and the second SRS resource set are sent by using beams in a same direction.

4. The method according to claim 1, wherein the first SRS resource set and the second SRS resource set have at least one same parameter: a path loss estimation reference signal, time domain behavior, and a transmit power-related parameter.

5. The method according to claim 1, wherein a transmission time interval between the first SRS resource set and the second SRS resource set is greater than or equal to antenna group activation and/or switching time of a terminal.

6. The method according to claim 1, wherein a transmission time interval between the first SRS resource set and the second SRS resource set is less than or equal to channel coherence time.

7. The method according to any one of claims 1 to 6, further comprising: receiving indication information delivered by the network device, wherein the indication information comprises at least one of information about a beam used by the first antenna group for downlink transmission and information about a beam used by the second antenna group for downlink transmission.

8. The method according to claim 7, wherein the beam used for downlink transmission is a beam corresponding to an SRS having highest signal quality.

9. The method according to claim 7, wherein a combination of SRS resources in the two SRS resource sets has a preset binding relationship.

10. The method according to claim 7, wherein the information about the beam used for downlink transmission is carried in qcl-info of channel state information reference signal CSI-RS configuration information, or is carried in downlink control information DCI.

11. The method according to claim 7, further comprising:

receiving, based on the indication information, downlink data or a downlink signal sent by the network device; or sending uplink data or an uplink signal to the network device based on the indication information.

12. The method according to any one of claims 1 to 11, wherein before the method, further comprising: reporting capability information of the terminal to the network device, wherein the capability information comprises at least one of the following:

that the terminal supports an SRS set in being configured for a maximum of N types of usage, wherein N is greater than or equal to 2; and
that the terminal supports an SRS set in being configured for beam management + antenna switch.

13. A resource measurement method, comprising:

sending configuration information to a terminal, wherein the configuration information comprises at least a first sounding reference signal SRS resource set and a second SRS resource set, and usage of each SRS resource set is beam management + antenna switch;
measuring each SRS resource, in the first SRS resource set, sent by the terminal by using a first antenna group, and measuring each SRS resource, in the second SRS resource set, sent by the terminal by using a second antenna group; and
determining, based on a measurement result, an SRS resource that meets a quality requirement in the first SRS resource set and an SRS resource that meets a quality requirement in the second SRS resource set.

14. The method according to claim 13, further comprising:
notifying the terminal of at least one of an identifier of the SRS resource that meets the quality requirement in the first SRS resource set and an identifier of the SRS resource that meets the quality requirement in the second SRS resource set.

15. The method according to claim 13 or 14, wherein the SRS resource that meets the quality requirement is an SRS resource having highest signal quality.

16. The method according to claim 13 or 14, wherein a combination of SRS resources in the two SRS resource sets has a preset binding relationship.

17. The method according to claim 14, wherein the identifier of the SRS resource that meets the quality requirement is carried in qcl-info of channel state information reference signal CSI-RS configuration information, or is carried in downlink control information DCI.

18. A communication apparatus, comprising:

a receiving module, configured to receive configuration information sent by a network device, wherein the configuration information comprises at least a first sounding reference signal SRS resource set and a second SRS resource set, and usage of each SRS resource set is beam management + antenna switch; and
a sending module, configured to: send each SRS resource in the first SRS resource set by using a first antenna group, and send each SRS resource in the second SRS resource set by using a second antenna group.

19. The communication apparatus according to claim 18, wherein SRS resources in a same SRS resource set are sent by using different beams.

20. The communication apparatus according to claim 18, wherein SRS resources whose identifiers are in a same order in the first SRS resource set and the second SRS resource set are sent by using beams in a same direction.

21. The communication apparatus according to claim 18, wherein the first SRS resource set and the second SRS resource set have at least one same parameter: a path loss estimation reference signal, time domain behavior, and a transmit power-related parameter.

22. The communication apparatus according to claim 18, wherein a transmission time interval between the first SRS resource set and the second SRS resource set is greater than or equal to antenna group activation and/or switching time of a terminal.

23. The communication apparatus according to claim 18, wherein a transmission time interval between the first SRS resource set and the second SRS resource set is less than or equal to channel coherence time.

24. The communication apparatus according to any one of claims 18 to 23, further comprising: receiving indication information delivered by the network device, wherein the indication information comprises at least one of information about a beam used by the first antenna group for downlink transmission and information about a beam used by the second antenna group for downlink transmission.

25. The communication apparatus according to claim 24, wherein the beam used for downlink transmission is a beam corresponding to an SRS having highest signal quality.

26. The communication apparatus according to claim 24, wherein a combination of SRS resources in the two SRS resource sets has a preset binding relationship.

27. The communication apparatus according to claim 24, wherein the information about the beam used for downlink transmission is carried in qcl-info of channel state information reference signal CSI-RS configuration information, or is carried in downlink control information DCI.

28. The communication apparatus according to claim 24, further comprising:

   receiving, based on the indication information, downlink data or a downlink signal sent by the network device; or sending uplink data or an uplink signal to the network device based on the indication information.

29. The communication apparatus according to any one of claims 18 to 28, wherein the sending module is further configured to report capability information of the terminal to the network device, wherein the capability information comprises at least one of the following:

   that the terminal supports an SRS set in being configured for a maximum of N types of usage, wherein N is greater than or equal to 2; and
   that the terminal supports an SRS set in being configured for beam management + antenna switch.

30. A communication apparatus, comprising:

   a sending module, configured to send configuration information to a terminal, wherein the configuration information comprises at least a first sounding reference signal SRS resource set and a second SRS resource set, and usage of each SRS resource set is beam management + antenna switch; and
   a processing module, configured to: measure each SRS resource, in the first SRS resource set, sent by the terminal by using a first antenna group, and measure each SRS resource, in the second SRS resource set, sent by the terminal by using a second antenna group; and
   determine, based on a measurement result, an SRS resource that meets a quality requirement in the first SRS resource set and an SRS resource that meets a quality requirement in the second SRS resource set.

31. The communication apparatus according to claim 30, further comprising:
   the sending module, further configured to notify the terminal of at least one of an identifier of the SRS resource that meets the quality requirement in the first SRS resource set and an identifier of the SRS resource that meets the quality requirement in the second SRS resource set.

32. The communication apparatus according to claim 30 or 31, wherein the SRS resource that meets the quality requirement is an SRS resource having highest signal quality.

33. The communication apparatus according to claim 30 or 31, wherein a combination of SRS resources in the two SRS resource sets has a preset binding relationship.

34. The communication apparatus according to claim 31, wherein the identifier of the SRS resource that meets the quality requirement is carried in qcl-info of channel state information reference signal CSI-RS configuration information, or is carried in downlink control information DCI.

35. A communication apparatus, comprising a processor, a memory, and a transceiver, wherein

    the transceiver is configured to receive a signal or send a signal;
    the memory is configured to store program code; and
    the processor is configured to invoke the program code from the memory to perform the method according to any one of claims 1 to 12 or the method according to any one of claims 13 to 17.

36. A communication apparatus, comprising a processor, wherein when the processor executes a computer program in a memory, the method according to any one of claims 1 to 12 or the method according to any one of claims 13 to 17 is performed.

37. A communication apparatus, comprising a memory and a processor, wherein the memory is configured to store a computer program; and when the processor executes the computer program in the memory, the communication apparatus performs the method according to any one of claims 1 to 12 or the method according to any one of claims 13 to 17.

38. A computer-readable storage medium, wherein the computer-readable storage medium comprises a computer program or instructions; and when the computer program or the instructions are run on a computer, the computer is enabled to perform the method according to any one of claims 1 to 12 or the method according to any one of claims 13 to 17.

39. A computer program product, wherein the computer program product comprises a computer program or instructions; and when the computer program or the instructions are run on a computer, the computer is enabled to perform the method according to any one of claims 1 to 12 or the method according to any one of claims 13 to 17.

40. A chip, comprising a processor and a communication interface, wherein the processor is configured to execute, by using the communication interface, a computer program or instructions in a memory, to implement the method according to any one of claims 1 to 12 or the method according to any one of claims 13 to 17.

FIG. 1

| Serving cell ID | CORESET ID | Oct 1 |
|---|---|---|
| CORESET ID | TCl state ID | Oct 2 |

FIG. 2

Example of an antenna of a terminal

Example of a time-frequency resource A horizontal axis indicates time

4R

FIG. 3

2T

2T

SRS resource #1-1
SRS resource #2-4

4R

SRS resource set #1
Used for beam selection

SRS resource set #2
Used for beam selection

FIG. 4

UE — gNB

100: Report a capability of the terminal →

101: Configuration information ←

102: Send an SRS →

103: SRS measurement

104: Notify a downlink beam ←

FIG. 5

Panel 1

Panel 2

Panel 3

FIG. 6

FIG. 7

Apparatus 800

Transceiver
module 810

Processing
module 820

FIG. 8

Apparatus 900

Processor 910

Transceiver 920

Memory 930

FIG. 9

Apparatus 1000

Transceiver
module 1010

Processing
module 1020

FIG. 10

Apparatus 1100

Processor 1110

Transceiver 1120

Memory 1130

FIG. 11

Antenna

Radio frequency circuit

Memory ⇔ Processor

Input/Output apparatus

1210

1220

FIG. 12

Data sending processor 1303

Channel encoder — Modulator — Symbol generation module

Processor 1301

Data receiving processor 1305

Channel decoder — Demodulator — Channel estimation module

FIG. 13

Apparatus 1400

Radio frequency apparatus

Modulation subsystem

Central processing subsystem

Multimedia subsystem

Peripheral subsystem

1406

1404

Memory

Interface

1403

Processor

FIG. 14

FIG. 15

EP 4 090 063 A1

## INTERNATIONAL SEARCH REPORT

| | International application No. |
|---|---|
| | **PCT/CN2020/075341** |

**A. CLASSIFICATION OF SUBJECT MATTER**

H04W 24/02(2009.01)i

According to International Patent Classification (IPC) or to both national classification and IPC

**B. FIELDS SEARCHED**

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNABS, CNTXT, CNKI, VEN, USTXT, 3GPP: SRS, 探测参考信号, 上行探测信号, 测量参考信号, 波束, 天线, 第一, 第二, 多, 两, sounding reference signal, beam, antenna, antennae, first, second, two, more

**C. DOCUMENTS CONSIDERED TO BE RELEVANT**

| Category* | Citation of document, with indication, where appropriate, of the relevant passages | Relevant to claim No. |
|---|---|---|
| X | CN 109417717 A (BEIJING XIAOMI MOBILE SOFTWARE CO., LTD.) 01 March 2019 (2019-03-01) <br> claims 9-22, description, paragraphs [0056]-[0058], [0102]-[0157] | 1-40 |
| X | WO 2019080054 A1 (LENOVO BEIJING LTD.) 02 May 2019 (2019-05-02) <br> description, paragraphs [0079]-[0081] | 1-40 |
| X | WO 2020010632 A1 (LENOVO BEIJING LTD.) 16 January 2020 (2020-01-16) <br> claims 15-20, description, paragraphs [0059]-[0069], figures 4-5 | 1-40 |
| A | CN 110034875 A (VIVO COMMUNICATION TECHNOLOGY CO., LTD.) 19 July 2019 (2019-07-19) <br> entire document | 1-40 |

☐ Further documents are listed in the continuation of Box C.  ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **13 October 2020** | **06 November 2020** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2020/075341** |

| Patent document cited in search report | | | Publication date (day/month/year) | Patent family member(s) | | | Publication date (day/month/year) |
| --- | --- | --- | --- | --- | --- | --- | --- |
| CN | 109417717 | A | 01 March 2019 | WO | 2020061953 | A1 | 02 April 2020 |
| WO | 2019080054 | A1 | 02 May 2019 | CN | 111373811 | A | 03 July 2020 |
| | | | | EP | 3669600 | A1 | 24 June 2020 |
| WO | 2020010632 | A1 | 16 January 2020 | None | | | |
| CN | 110034875 | A | 19 July 2019 | None | | | |

Form PCT/ISA/210 (patent family annex) (January 2015)